(19) Europäisches Patentamt
European Patent Office
Office européen des brevets

(11) **EP 4 697 658 A1**

(12) **EUROPEAN PATENT APPLICATION**

(43) Date of publication:
**18.02.2026 Bulletin 2026/08**

(21) Application number: **25192853.7**

(22) Date of filing: **30.07.2025**

(51) International Patent Classification (IPC):
**H04L 25/03** $^{(2006.01)}$ **H04J 11/00** $^{(2006.01)}$
**H04L 25/02** $^{(2006.01)}$

(52) Cooperative Patent Classification (CPC):
**H04L 25/03993; H04B 17/346; H04J 11/0023;**
**H04L 25/0224**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.08.2024 KR 20240108967**

(71) Applicant: **Samsung Electronics Co., Ltd.**
**Suwon-si, Gyeonggi-do 16677 (KR)**

(72) Inventors:
• **LEE, Jaehwan**
**16677 Suwon-si (KR)**
• **KIM, Jinho**
**16677 Suwon-si (KR)**
• **JOO, Hyunseung**
**16677 Suwon-si (KR)**

(74) Representative: **Marks & Clerk LLP**
**15 Fetter Lane**
**London EC4A 1BW (GB)**

(54) **WIRELESS COMMUNICATION DEVICE CONFIGURED TO PERFORM INTERFERENCE WHITENING OPERATION AND OPERATING METHOD THEREOF**

(57) A wireless communication device includes a transceiver configured to receive a wireless signal, and a processor configured to in a time-frequency domain, in which resources are allocated across subcarriers and symbols in a given time slot for data transmission, determine a first area and a second area within a resource element (RE) area including a plurality of REs, segment the second area into a plurality of segmentation areas, calculate a first adjustment whitening filter and a plurality of segmentation adjustment whitening filters to be respectively applied to the first area and the plurality of segmentation areas, and perform an interference whitening operation on the first area and the plurality of segmentation areas, based on the first adjustment whitening filter and the plurality of segmentation adjustment whitening filters, respectively.

FIG. 5

EP 4 697 658 A1

**Description**

TECHNICAL FIELD

The invention generally relates to a wireless communication device and an operating method of a wireless communication device. Apparatuses and methods consistent with example embodiments relate to a wireless communication device configured to perform a decoding operation after performing an interference whitening operation on a wireless signal.

BACKGROUND

In a communication system, channel estimation may be needed to decode a wireless signal. The performance of the channel estimation may not be satisfactory in environments with long delay spreads or high Doppler frequencies.
A channel estimation error may appear as interference from the perspective of symbol detection. Thus, as the channel estimation error increases, a noise plus interference variance (NIV) value may increase. To compensate for performance degradation due to interference (e.g., an NIV), an interference whitening (IW) operation may be performed. In this case, because the IW operation is performed using the same whitening filter on resource blocks (RBs) included in the same group (e.g., a precoding resource block group (PRG)), there may be a problem in that it is difficult to appropriately compensate for the channel estimation error. Therefore, it may be necessary to develop a method of appropriately compensating for the channel estimation error by using the IW operation.

SUMMARY

The invention is defined by the independent claims. Preferred embodiments are defined by the dependent claims.
According to an aspect of the present invention, there is provided a wireless communication device including a transceiver configured to receive a wireless signal, and a processor configured to in a time-frequency domain, in which resources are allocated across subcarriers and symbols in a given time slot for data transmission, determine a first area and a second area within a resource element (RE) area including a plurality of REs, segment the second area into a plurality of segmentation areas, calculate a first adjustment whitening filter and a plurality of segmentation adjustment whitening filters to be respectively applied to the first area and the plurality of segmentation areas, and perform an interference whitening operation on the first area and the plurality of segmentation areas, based on the first adjustment whitening filter and the plurality of segmentation adjustment whitening filters, respectively.
According to another aspect of the present invention, there is provided an operating method of a wireless communication device. The method includes receiving a wireless signal through a transceiver, performing, by using a processor, a channel estimation operation, based on the wireless signal, performing, by using the processor, a noise covariance estimation operation, based on a result of performing the channel estimation operation, performing, by using the processor, a whitening filter calculation operation, based on a result of performing the noise covariance estimation operation, and performing, by using the processor, an interference whitening operation, based on a result of performing the whitening filter calculation operation, wherein the performing of the interference whitening operation includes in a time-frequency domain, in which resources are allocated across subcarriers and symbols in a given time slot for data transmission, determining a first area and a second area in an RE area including a plurality of REs, segmenting the second area into a plurality of segmentation areas, calculating a first adjustment whitening filter and a plurality of segmentation adjustment whitening filters to be respectively applied to the first area and the plurality of segmentation areas, and performing the interference whitening operation on the first area and the plurality of segmentation areas, based on the first adjustment whitening filter and the plurality of segmentation adjustment whitening filters, respectively.
We further disclose a wireless communication device including a transceiver configured to receive a wireless signal; and a processor configured to in a time-frequency domain, in which resources are allocated across subcarriers and symbols in a given time slot for data transmission, determine a first area and a second area within a resource element (RE) area including a plurality of REs, calculate a first adjustment whitening filter and a second adjustment whitening filter to be respectively applied to the first area and the second area, and perform an interference whitening operation on the first area and the second area, based on the first adjustment whitening filter and the second adjustment whitening filter, respectively.

BRIEF DESCRIPTION OF DRAWINGS

The above and/or other aspects will be more apparent by describing certain example embodiments, with reference to the accompanying drawings, in which:

**EP 4 697 658 A1**

FIG. 1 is a diagram of a wireless communication system according to one or more embodiments;

FIG. 2 is a block diagram of a wireless communication device according to one or more embodiments;

FIG. 3 is a diagram illustrating a structure of a time-frequency domain, which represents a wireless resource region in a wireless communication system according to one or more embodiments;

FIG. 4 is a flowchart of an operating method of a wireless communication device according to one or more embodiments;

FIG. 5 is a flowchart of an example of a method of performing an interference whitening operation in a wireless communication device according to one or more embodiments;

FIG. 6 is a flowchart of an example of a method of determining a first area and a second area in a wireless communication device according to one or more embodiments;

FIG. 7 is a diagram of an example of determining a first area and a second area in a resource element (RE) area, based on an operating method of a wireless communication device according to one or more embodiments;

FIG. 8 is a diagram of another example of determining a first area and a second area in an RE area, based on an operating method of a wireless communication device according to one or more embodiments;

FIG. 9 is a diagram of another example of determining a first area and a second area in an RE area, based on an operating method of a wireless communication device according to one or more embodiments;

FIG. 10 is a flowchart of an example of a method of segmenting a second area into a plurality of segmentation areas in a wireless communication device according to one or more embodiments;

FIG. 11 is a diagram of an example of segmenting a second area into a plurality of segmentation areas in an RE area, based on an operating method of a wireless communication device, according to one or more embodiments;

FIG. 12 is a diagram of another example of segmenting a second area into a plurality of segmentation areas in an RE area, based on an operating method of a wireless communication device, according to one or more embodiments;

FIG. 13 is a diagram of another example of segmenting a second area into a plurality of segmentation areas in an RE area, based on an operating method of a wireless communication device, according to one or more embodiments;

FIG. 14 is a flowchart of an example of a method of segmenting a second area into a plurality of segmentation areas, based on a delay spread, in a wireless communication device according to one or more embodiments;

FIG. 15 is a diagram of an example of segmenting a second area into a plurality of segmentation areas, based on a delay spread, in an RE area, by using an operating method of a wireless communication device, according to one or more embodiments;

FIG. 16 is a flowchart of an example of a method of segmenting a second area into a plurality of segmentation areas, based on a Doppler frequency, in a wireless communication device according to one or more embodiments;

FIG. 17 is a diagram of an example of segmenting a second area into a plurality of segmentation areas, based on a Doppler frequency, in an RE area by using an operating method of a wireless communication device according to one or more embodiments;

FIG. 18 is a flowchart of an example of a method of merging a plurality of segmentation areas with adjacent segmentation areas having similar channel estimation error values, by using an operating method of a wireless communication device according to one or more embodiments;

FIG. 19 is a diagram of an example of merging a plurality of segmentation areas with adjacent segmentation areas having similar channel estimation error values in an RE area, by using an operating method of a wireless communication device according to one or more embodiments;

FIG. 20 is a flowchart of an example of a method of calculating a first adjustment whitening filter and a plurality of segmentation adjustment whitening filters in a wireless communication device according to one or more embodiments;

FIG. 21 is a flowchart of an example of a specific method of calculating a first adjustment whitening filter in a wireless communication device according to one or more embodiments;

FIG. 22 is a flowchart of an example of a specific method of calculating a plurality of segmentation adjustment whitening filters in a wireless communication device according to one or more embodiments;

FIG. 23 is a flowchart of another example of a method of performing an interference whitening operation in a wireless communication device according to one or more embodiments;

FIG. 24 is a block diagram of an electronic device according to one or more embodiments; and

FIG. 25 is a conceptual diagram of an Internet of Things (IoT) network system according to one or more embodiments.

DETAILED DESCRIPTION

Hereinafter, embodiments will be described in detail with reference to the accompanying drawings.

Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples.

While such terms as "first," "second," etc., may be used to describe various elements, such elements must not be limited to the above terms. The above terms may be used only to distinguish one element from another.

One or more embodiments provide a wireless communication device configured to perform an interference whitening operation capable of appropriately compensating for a channel estimation error.

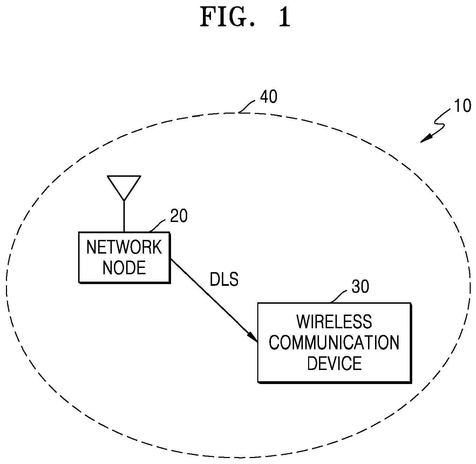

FIG. 1 is a diagram of a wireless communication system 10 according to one or more embodiments.

Referring to FIG. 1, the wireless communication system 10 may include a network node 20 and a wireless communication device 30. The network node 20 may provide communication services within a specific geographic area, known as a cell 40. The network node 20 may act as a serving cell for the wireless communication device 30.

The description below will focus on embodiments in which the wireless communication system 10 is based on a new radio (NR) network, but the embodiments are not limited thereto. The wireless communication system 10 may be applied to other wireless communication systems with similar technical backgrounds or channel settings (e.g., cellular communication systems, such as long-term evolution (LTE), LTE-advanced (LTE-A), wireless broadband (WiBro), and global system for mobile communication (GSM)), or near-field communication (NFC) systems, such as Bluetooth and NFC.

A wireless communication network of the wireless communication system 10 may support communication between a plurality of wireless communication devices by sharing available network resources. For example, in the wireless communication network, information may be transmitted in various multiple access manners, such as code division multiple access (CDMA), frequency division Multiple Access (FDMA), time division multiple access (TDMA), orthogonal frequency division multiple access (OFDMA), single carrier frequency division multiple access (SC-FDMA), OFDM-FDMA, OFDM-TDMA, and OFDM-CDMA.

It is additionally noted that various functions described below may be implemented or supported by artificial intelligence (AI) technology or at least one computer program. Each of the at least one computer program may include computer-readable program code and be executed on a computer-readable medium. The term "computer-readable medium" refers to all types of media that may be accessed by a computer, for example, read-only memory (ROM), random access memory (RAM), a hard disk drive (HDD), a compact disk (CD), a digital video disk (DVD), or any other type of memory. A computer-readable medium may be a "non-transitory" computer-readable medium distinguished from transitory signals or temporary electronic signals. The non-transitory computer-readable medium may include a medium on which data may be permanently stored and a medium on which data may be stored and overwritten later, such as a rewritable optical disk or an erasable memory device.

In embodiments described below, a hardware approach method is described as an example. However, embodiments include a technique using both hardware and software, and thus, the embodiments do not exclude a software approach method.

The network node 20 may be a base station that communicates with the wireless communication device 30 or another base station. The network node 20 may exchange control information and data with the wireless communication device 30 within the same cell, or devices within another cell. For example, the network node 20 may be implemented as a base station, Node B, evolved-Node B (eNB), next generation Node B (gNB), a base transceiver system (BTS), an access point (AP), a relay node, a remote radio head (RRH), a radio unit (RU), a wireless device, a mobile hotspot, a Wi-Fi router, a tethering device, or the like.

The wireless communication device 30 may be fixed or mobile. The wireless communication device 30 may refer to any device capable of transmitting and receiving data and/or control information by communicating with the network node 20. For example, the wireless communication device 30 may be referred to as a terminal, terminal equipment, a mobile station (MS), a mobile terminal (MT), a user terminal (UT), a subscribe station (SS), a wireless device, or a handheld device.

The network node 20 may transmit a downlink signal DLS as a wireless signal to the wireless communication device 30 within the cell.

The wireless communication device 30 may receive the downlink signal DLS transmitted from the network node 20. The wireless communication device 30 may perform a channel estimation operation, a noise covariance estimation operation, a whitening filter calculation operation, and/or an interference whitening operation, based on the downlink signal DLS.

In one or more embodiments, the wireless communication device 30 may determine a first area and a second area in a resource element (RE) area including a plurality of REs, segment the second area into a plurality of segmentation areas, calculate a first adjustment whitening filter and a plurality of segmentation adjustment whitening filters to be respectively applied to the first area and a plurality of segmentation areas, and perform an interference whitening operation on the first area and the plurality of segmentation areas, based on the first adjustment whitening filter and the plurality of segmentation adjustment whitening filters. As described above, the wireless communication device 30 according to the embodiment may appropriately compensate for a channel estimation error by performing the interference whitening operation on the first area and the plurality of segmentation areas by using different whitening filters. Thus, the communication performance of the wireless communication device 30 may improve.

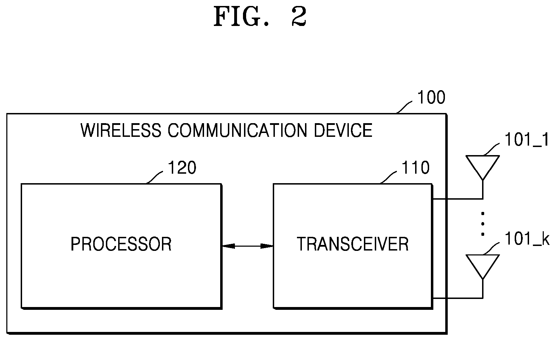

A more detailed structure and operating method of the wireless communication device 30 are described with reference to FIG. 2 and the following drawings.

FIG. 2 is a block diagram of a wireless communication device 100 according to one or more embodiments.

Referring to FIG. 2, the wireless communication device 100 according to one or more embodiments may include a plurality of antennas 101_1 to 101_k, a transceiver 110, and a processor 120.

The transceiver 110 may receive a wireless signal (e.g., a downlink signal) from an external device through the antennas 101_1 to 101_k. The transceiver 110 may generate an intermediate frequency or baseband signals by down-converting the received wireless signal. Additionally or alternatively, the transceiver 110 may up-convert the intermediate frequency or the baseband signals output by the processor 120 and transmit an uplink signal to the external device through the antennas 101_1 to 101_k.

The processor 120 may control all communication operations of the wireless communication device 100. The processor 120 may be implemented as a numeric processing unit (NPU) and/or a graphic processing unit (GPU).

The processor 120 may generate data signals by performing preferably each of filtering, decoding, and digitizing the intermediate frequency or the baseband signals. The processor 120 may perform a predetermined operation based on the data signals. Also, the processor 120 may encode, multiplex, and/or analogize the data signals generated through predetermined operations.

The processor 120 may perform a channel estimation operation based on the wireless signal. The processor 120 may perform a noise covariance estimation operation based on a result of performing the channel estimation operation. The processor 120 may perform a whitening filter calculation operation based on the result of performing the noise covariance estimation operation. The processor 120 may perform an interference whitening operation based on a result of performing the whitening filter calculation operation.

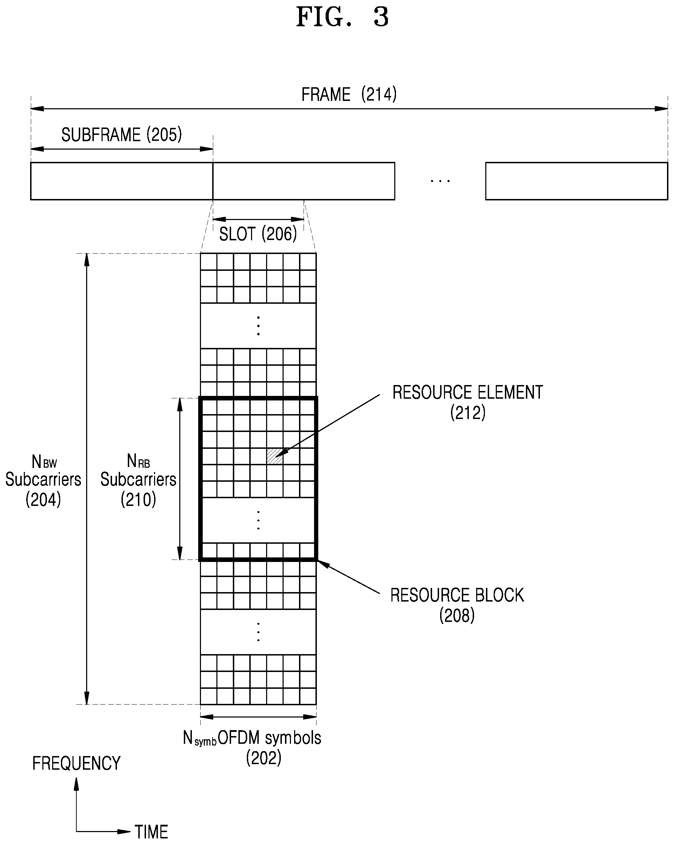

In one or more embodiments, the processor 120 may determine a first area and a second area in an RE area including a plurality of REs. The RE area may be an area including a plurality of REs included in any one of a plurality of slots that are included in the wireless signal received from the external device. In this case, a structure of the wireless signal received by the wireless communication device 100 may be described in further detail with reference to FIG. 3.

FIG. 3 is a diagram illustrating a structure of a time-frequency domain, which represents a wireless resource region in a wireless communication system according to one or more embodiments. In the time-frequency domain, resources are allocated across subcarriers and symbols in a given time slot for data transmission.

Referring to FIG. 3, a wireless resource region used in the wireless communication system may be confirmed. In the wireless resource region of FIG. 3, an abscissa denotes a time domain, and an ordinate denotes a frequency domain.

A minimum transmission unit in a time domain may be an OFDM symbol, and $N_{symb}$ OFDM symbols 202 may be gathered to constitute one slot 206. Two slots may be gathered to constitute one subframe 205. In an example, the slot 206 may have a length of 0.5 ms, and the subframe 205 may have a length of 1.0 ms. However, in other embodiments, a length of the slot 206 may be variable depending on the configuration of the slot 206, and the number of slots in the subframe 205 may vary according to the length of the slot 206. It is additionally noted that a frame 214 may be a unit of the time domain, which may include e.g. ten (10) subframes 205.

A minimum transmission unit in the frequency domain may be a subcarrier, and a bandwidth of the entire system transmission band may include a total of $N_{BW}$ subcarriers 204.

In the time-frequency domain, a basic unit of a resource may be an RE 212, which may be expressed as an OFDM symbol index and a subcarrier index. A resource block 208 may be defined as $N_{symb}$ consecutive OFDM symbols 202 in the time domain and $N_{RB}$ consecutive subcarriers 210 in the frequency domain. Thus, one resource block 208 may include ($N_{symb}$ * $N_{RB}$) REs 212. A resource block pair may be a unit that connects two RBs along a time axis and include ($N_{symb}$ * $2N_{RB}$) REs 212.

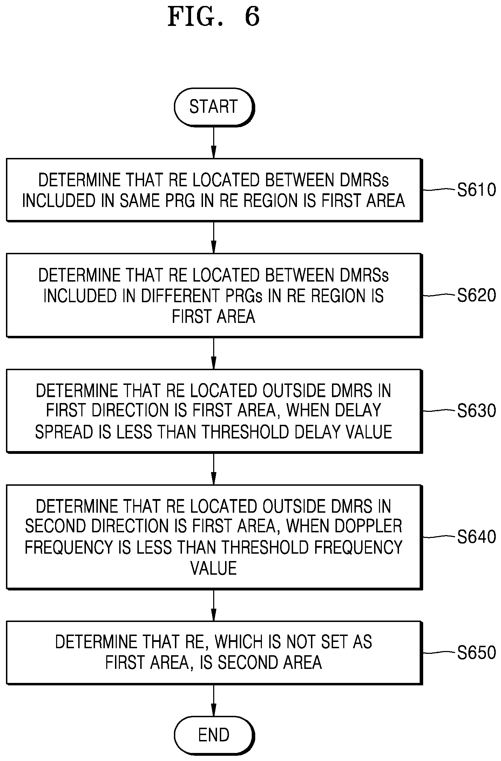

Referring back to FIG. 2, a first area may be an area including REs that are expected to have relatively small channel estimation errors, from among a plurality of REs included in an RE area. Conversely, a second area may be an area including REs that are expected to have relatively large channel estimation errors, from among the plurality of REs included in the RE area. In one or more embodiments, the processor 120 may determine the first area and the second area, based on one or more, preferably each of, a position of a demodulation reference signal (DMRS), a size of a precoding resource block group (PRG), a delay spread, and a Doppler frequency. A more detailed method by which the processor 120 determines the first area and the second area may be described below with reference to FIGS. 6 to 9.

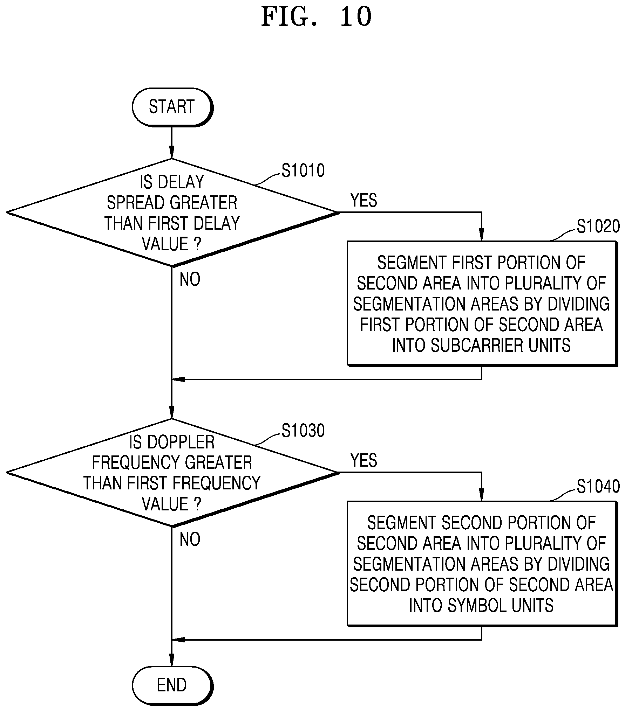

In one or more embodiments, the processor 120 may segment the second area into a plurality of segmentation areas. The processor 120 may segment the second area into the plurality of segmentation areas, based on preferably both of the delay spread and the Doppler frequency. A more detailed method by which the processor 120 determines the first area and the second area may be described below with reference to FIGS. 10 to 19.

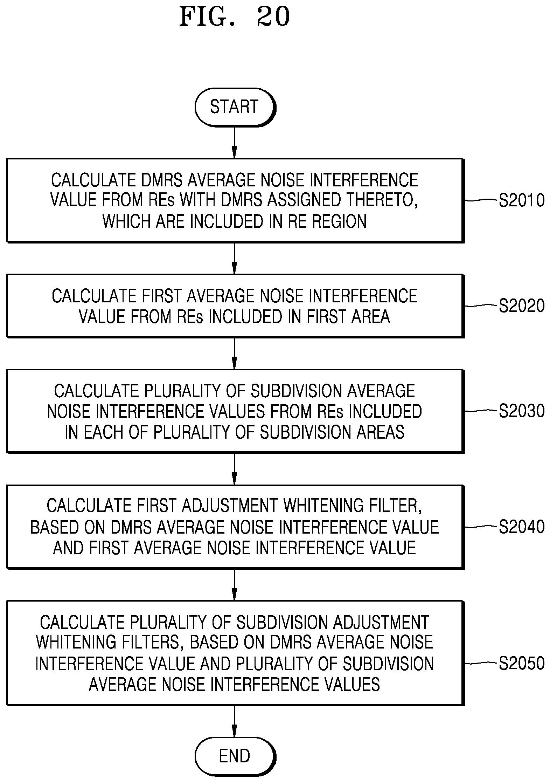

In one or more embodiments, the processor 120 may calculate a first adjustment whitening filter and a plurality of segmentation adjustment whitening filters to be respectively applied to the first area and the plurality of segmentation areas. A more detailed method by which the processor 120 calculates the first adjustment whitening filter and the plurality of segmentation adjustment whitening filters may be described with reference to FIGS. 20 to 22.

In one or more embodiments, the processor 120 may perform an interference whitening operation on the first area and the plurality of segmentation areas, based on the first adjustment whitening filter and the plurality of segmentation adjustment whitening filters.

As described above, the processor 120 of the wireless communication device 100 according to the embodiment may appropriately compensate for a channel estimation error by performing the interference whitening operation on the first area and the plurality of segmentation areas by using different whitening filters. Thus, the communication performance of wireless communication device 100 may improve.

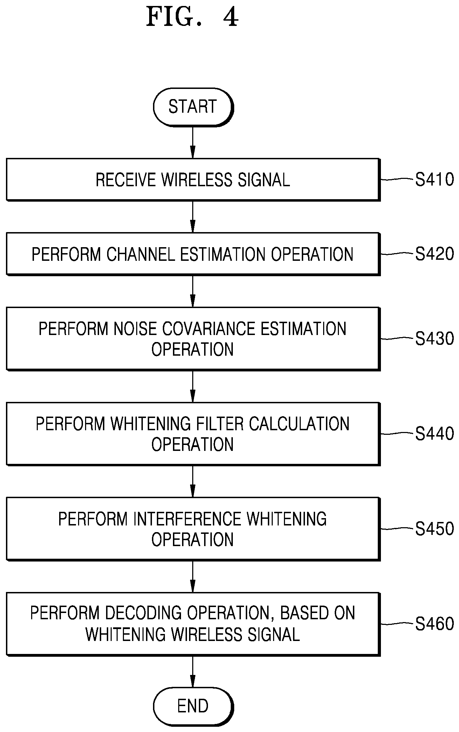

FIG. 4 is a flowchart of an operating method of a wireless communication device according to one or more embodiments.

Referring to FIG. 4, in operation S410, the wireless communication device 100 may receive a wireless signal from an external device through the transceiver 110. The wireless signal may be expressed as shown in Equation 1:

$$[\text{Equation 1}]$$

$$y = Hx + v$$

wherein y may denote a received wireless signal vector with a size of $n_r$*1. Here, $n_r$ may denote the number of receiving antennas (e.g., the number of antennas of the wireless communication device 30 of FIG. 1). H may denote a channel matrix having a size of $n_r$*$n_t$. Here, nt may denote the number of transmission antennas (e.g., the number of antennas of the network node 20 of FIG. 1). x may denote a transmission signal vector having a size of $n_t$*1, and v may denote a noise interference vector having a size of $n_r$*1.

In operation S420, the processor 120 of the wireless communication device 100 may perform a channel estimation operation. The processor 120 may perform the channel estimation operation based on the wireless signal.

When a transmission signal vector x is transmitted through an RE to which a DMRS is assigned, the processor 120 may be able to estimate the channel matrix H, as both the transmission signal vector x and the wireless signal vector y are known to the processor 120. The estimated channel matrix may be referred to as Ĥ. When the transmission signal vector x is transmitted through an RE assigned to which a physical downlink shared channel (PDSCH), the processor 120 may obtain the channel estimation matrix Ĥ using an interpolation method or an extrapolation method. For example, when the transmission signal vector x is transmitted through an RE assigned to a PDSCH, which is located between REs where a DMRS is assigned in an RE area, the processor 120 may obtain the channel estimation matrix Ĥ using the interpolation method. In another example, when the transmission signal vector x is transmitted through an RE assigned to a PDSCH located outside the REs where the DMRS is assigned in the RE area, the processor 120 may obtain the channel estimation

matrix Ĥ by using an extrapolation method.

In operation S430, the processor 120 may perform a noise covariance estimation operation. The processor 120 may perform the noise covariance estimation operation, based on a result of performing the channel estimation operation. Noise covariance may be estimated by using Equation 2:

[Equation 2]

$$\widehat{R} = E\{\hat{v}\hat{v}^H\} = E\left\{(y - \widehat{H}x)(y - \widehat{H}x)^H\right\}$$

$$= \frac{1}{|S|} \sum_{(k,l) \in S} \left(y(k,l) - \widehat{H}(k,l)x(k,l)\right)\left(y(k,l) - \widehat{H}(k,l)x(k,l)\right)^H$$

wherein Ŕ may denote an estimated noise covariance matrix, S may denote a set of REs to which a received signal (e.g., a DMRS or a PDSCH) is assigned to estimate noise covariance in the RE area, k may denote a subcarrier index, and l may denote a symbol index.

In operation S440, the processor 120 may perform a whitening filter calculation operation. The processor 120 may perform the whitening filter calculation operation, based on a result of performing the noise covariance estimation operation. A whitening filter may be calculated by using Equations 3 and 4:

[Equation 3]

$$W = L^{-1}$$

[Equation 4]

$$\widehat{R} = LL^H$$

wherein W may denote a matrix representing the whitening filter, and L may be a triangular matrix with positive diagonal elements.

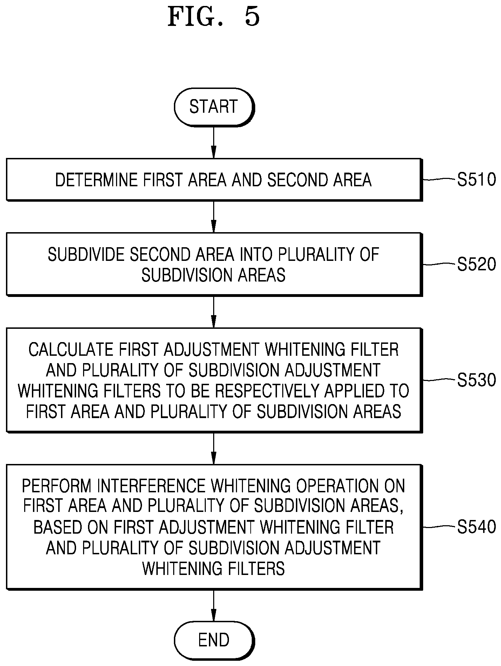

In operation S450, the processor 120 may perform an interference whitening operation. The processor 120 may perform an interference whitening operation, based on a result of performing the whitening filter calculation operation. The processor 120 may divide an RE area including a plurality of REs, adjust a whitening filter to be applied to each of divided areas, and apply an interference whitening operation to each of the divided areas using the adjusted whitening filter. A more detailed method by which the processor 120 performs the interference whitening operation may be described with reference to FIG. 5.

In operation S460, the processor 120 may perform a decoding operation, based on a whitening wireless signal. The processor 120 may perform the decoding operation, based on the whitening wireless signal generated as a result of performing the interference whitening operation.

As described above, the wireless communication device 100 according to the embodiment may perform the decoding operation, based on the whitening wireless signal that is obtained by applying the interference whitening operation to each of the divided areas using the adjusted whitening filter. This decoding operation may improve the communication performance of the wireless communication device 100. By dividing the RE area into smaller, manageable regions and applying an adjusted whitening filter to each region, the processor 120 can in embodiments focus on localized interference. It is further noted that the use of the adjusted whitening filter may allow the wireless communication device 100 to adapt to varying interference levels across different parts of the signal space.

FIG. 5 is a flowchart of an example of a method of performing an interference whitening operation in a wireless communication device 100 according to one or more embodiments.

Referring to FIG. 5, in operation S510, the wireless communication device 100 may determine, by using a processor 120, a first area and a second area in an RE area including a plurality of REs. The processor 120 may determine the first area and the second area, based on one or more, preferably each, of a position of a DMRS, a size of a PRG, a delay spread, and a Doppler frequency. A more detailed method by which the processor 120 determines the first area and the second area may be described with reference to FIG. 6.

FIG. 6 is a flowchart of an example of a method of determining a first area and a second area in a wireless communication device according to one or more embodiments. The processor 120 of the wireless communication device 100 may identify an RE with lower channel estimation errors compared to other REs and determine that the identified RE is in the first area, while the remaining REs are assigned to the second area. The processor 120 may identify REs with low channel estimation errors using an example method described below.

Referring to FIG. 6, in operation S610, the wireless communication device 100 may determine, by using the processor 120, that an RE located between DMRSs included in the same PRG in an RE area is the first area. The first area may be an area including REs that are expected to have relatively small channel estimation errors, from among a plurality of REs included in the RE area.

The processor 120 may perform, by using an interpolation method, a channel estimation operation on the RE located between the DMRSs. In this case, when the channel estimation operation is performed using the interpolation method, the channel estimation error may be smaller than when the channel estimation operation is performed using an extrapolation method. Accordingly, the processor 120 may determine that the RE located between the DMRSs included in the same PRG in the RE area is the first area.

In operation S620, the wireless communication device 100 may determine, by the processor 120, that the RE located between the DMRSs included in different PRGs in the RE area is the first area.

The processor 120 may perform, by using an interpolation method, the channel estimation operation on the RE located between the DMRSs included in the different PRGs. Accordingly, the processor 120 may determine that the RE between the DMRSs included in the different PRGs in the RE area is the first area.

In operation S630, when a delay spread is less than a threshold delay value, the wireless communication device 100 may determine, by using the processor 120, that an RE located outside the DMRS in a first direction is the first area.

The delay spread may be a factor that affects the channel estimation error. In this case, when the delay spread is great, a channel estimation error may increase due to a change in frequency. Conversely, when the delay spread is small, the channel estimation error may be reduced due to a change in frequency. The threshold delay value may be a value that serves as a criterion for judging whether an increase in channel estimation error due to a change in frequency is great, and may be determined experimentally. When the delay spread is less than the threshold delay value, an increase in channel estimation error due to a change in frequency may be small. Conversely, when the delay spread is greater than or equal to the threshold delay value, an increase in channel estimation error due to a change in frequency may be great.

When the delay spread is less than the threshold delay value, the processor 120 may determine that the RE located outside the DMRS in the first direction is the first area. In this case, the first direction may be a frequency direction. That is, when the delay spread is less than the threshold delay value, an increase in channel estimation error due to a change in frequency may be small. Thus, even when an RE is located outside the DMRS and a channel estimation operation is performed on the RE by using an extrapolation method, the processor 120 may determine the RE as the first area because the RE is expected to have a relatively small channel estimation error.

In operation S640, when a Doppler frequency is less than a threshold frequency value, the wireless communication device 100 may determine, by using the processor 120, that an RE located outside the DMRS in a second direction is the first area.

The Doppler frequency may be a factor that affects the channel estimation error. In this case, when the Doppler frequency is great, a channel estimation error may increase over time. Conversely, when the Doppler frequency is small, the channel estimation error may be reduced over time. The threshold frequency value may serve as a criterion for judging whether an increase in channel estimation error over time is great, and may be determined experimentally. When the Doppler frequency is less than the threshold frequency value, the increase in channel estimation error over time may be small. Conversely, when the Doppler frequency is greater than or equal to the threshold frequency value, the increase in channel estimation error over time may be great.

When the Doppler frequency is less than the threshold frequency value, the processor 120 may determine that the RE located outside the DMRS in the second direction is the first area. In this case, the second direction may be a time direction. That is, when the Doppler frequency is less than the threshold frequency value, an increase in channel estimation error over time may be small. Thus, even when an RE is located outside the DMRS and a channel estimation operation is performed on the RE by using an extrapolation method, the processor 120 may determine the RE as the first area because the RE is expected to have a relatively small channel estimation error.

In operation S650, the wireless communication device 100 may determine, by using the processor 120, that an RE that is not set as the first area is the second area. The second area may be an area including REs that are expected to have relatively large channel estimation errors, from among a plurality of REs included in the RE area. Due to operations S610 to S640, the processor 120 may determine that the remaining RE, which is not expected to have relatively small channel estimation errors, is the second area.

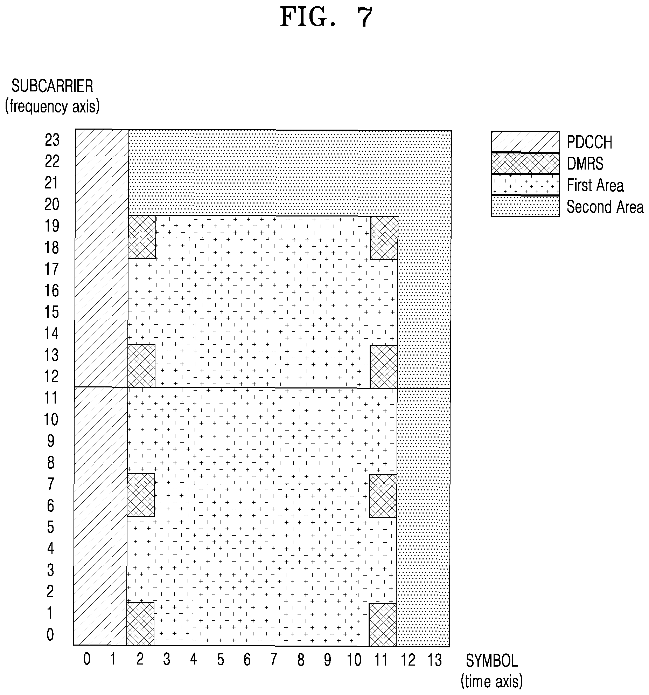

An example of determining the first area and the second area in the RE area through processes, such as operations S610 to S650, may be confirmed with reference to FIGS. 7 to 9.

FIG. 7 is a diagram of an example of determining a first area and a second area in an RE area, based on an operating method of a wireless communication device according to one or more embodiments.

In FIGS. 7-9, 11-13, 15, 17, and 19, each of which illustrates an RE area, the RE area may include symbols with symbol indices of 0 to 13 and subcarriers with subcarrier indices of 0 to 23. In the RE area, the symbol indices are aligned along a time axis. In the RE area, the subcarrier indices are aligned along a frequency axis..

Referring to FIG. 7, an example of determining the RE area as the first area and the second area is provided. In the embodiment of FIG. 7, each of REs with a symbol index of 0 or 1 may be an RE to which a physical downlink control channel (PDCCH) is assigned. Also, each of REs with a symbol index of 2 or 11 and a subcarrier index of 0, 1, 6, 7, 12, 13, 18, or 19 may be an RE to which a DMRS is assigned. An RE to which the PDCCH and the DMRS are not assigned may be an RE to which a PDSCH is assigned. In the embodiment of FIG. 7, a delay spread may be assumed to be greater than or equal to the threshold delay value, and a Doppler frequency may be assumed to be greater than or equal to the threshold frequency value.

To begin with, the processor 120 may determine that an RE with a symbol index of 2 to 11, a subcarrier index of 0 to 7 or 12 to 19, and a PDSCH assigned thereto, which is located between DMRSs included in the same PRG, is the first area.

Next, the processor 120 may determine that an RE with a symbol index of 2 to 11, a subcarrier index of 8 to 11, and a PDSCH assigned thereto, which is located between DMRSs included in different PRGs, is the first area.

Thereafter, because the delay spread is greater than or equal to the threshold delay value, the processor 120 may not determine that an RE located outside a DMRS in a first direction is the first area.

In addition, because the Doppler frequency is greater than or equal to the threshold frequency value, the processor 120 may not determine that an RE located outside the DMRS in a second direction is the first area.

Finally, the processor 120 may determine that an RE with a symbol index of 12 or 13, a subcarrier index of 20 to 23, and a PDSCH assigned thereto, which is not determined as the first area, is the second area.

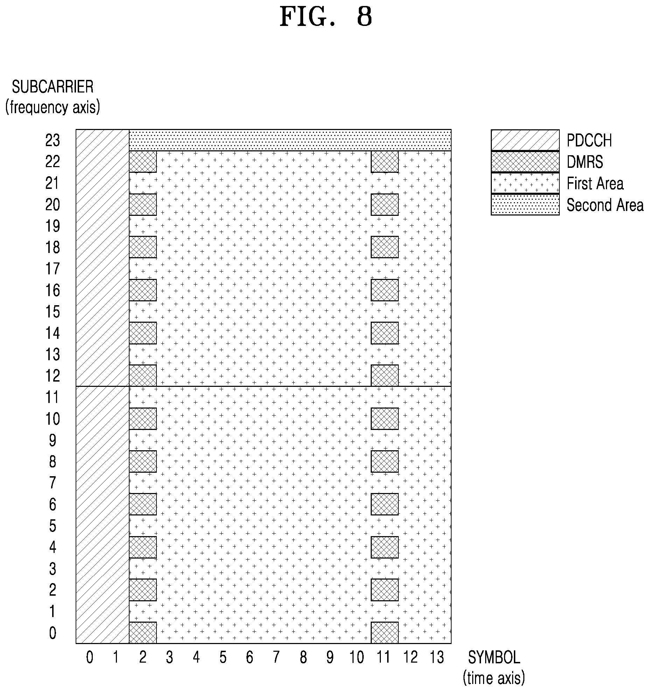

FIG. 8 is a diagram of another example of determining a first area and a second area in an RE area, based on an operating method of a wireless communication device according to one or more embodiments.

Referring to FIG. 8, another example of determining the RE area as the first area and the second area is provided. In the embodiment of FIG. 8, each of REs with a symbol index of 0 or 1 may be an RE to which a PDCCH is assigned. In addition, each of REs with a symbol index of 2 or 11 and an even subcarrier index may be an RE to which a DMRS is assigned. An RE to which the PDCCH and the DMRS are not assigned may be an RE to which a PDSCH is assigned. In the embodiment of FIG. 8, a delay spread may be assumed to be greater than or equal to a threshold delay value, and a Doppler frequency may be assumed to be less than a threshold frequency value.

To begin with, the processor 120 may determine that an RE with a symbol index of 2 to 11, a subcarrier index of 0 to 10 or 12 to 22, and a PDSCH assigned thereto, which is located between DMRSs included in the same PRG, is the first area.

Next, the processor 120 may determine that an RE with a symbol index of 2 to 11, a subcarrier index of 11, and a PDSCH assigned thereto, which is located between DMRSs included in different PRGs, is the first area.

Thereafter, because the delay spread is greater than or equal to the threshold delay value, the processor 120 may not determine that an RE located outside a DMRS in a first direction is the first area.

Afterwards, because the Doppler frequency is less than the threshold frequency value, the processor 120 may determine that an RE with a symbol index of 12 or 13 and a subcarrier index of 0 to 22, which is located outside the DMRS in a second direction, is the first area.

Finally, the processor 120 may determine that an RE with a subcarrier index of 23 and a PDSCH assigned thereto, is not determined as the first area, and constitutes the second area.

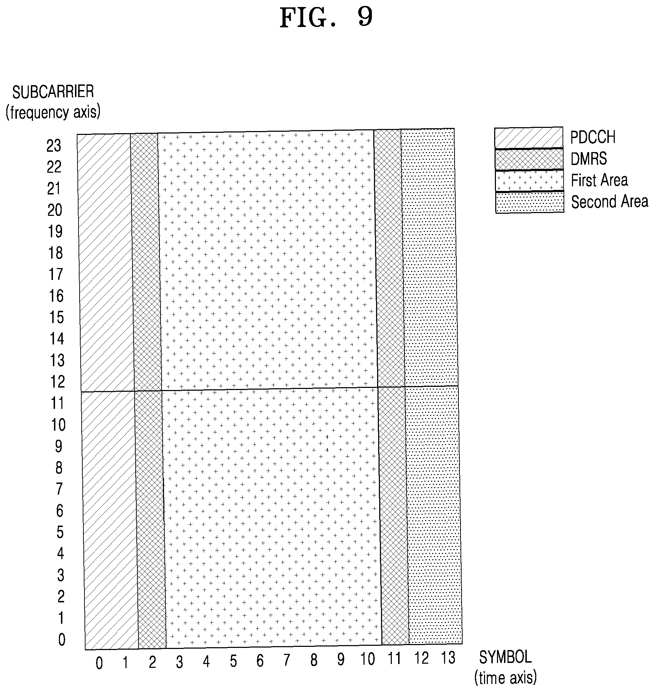

FIG. 9 is a diagram of another example of determining a first area and a second area in an RE area, based on an operating method of a wireless communication device according to one or more embodiments.

Referring to FIG. 9, another example of determining the RE area as the first area and the second area is provided. In the embodiment of FIG. 9, each of REs with a symbol index of 0 or 1 may be an RE to which a PDCCH is assigned. Also, each of REs with a symbol index of 2 or 11 may be an RE to which a DMRS is assigned. An RE to which the PDCCH and the DMRS are not assigned may be an RE to which a PDSCH is assigned. In the embodiment of FIG. 9, a delay spread may be assumed to be less than a threshold delay value, and a Doppler frequency may be assumed to be greater than or equal to a threshold frequency value.

To begin with, the processor 120 may determine that an RE with a symbol index of 3 to 10, which is located between DMRSs included in the same PRG, is the first area.

Next, the processor 120 may determine that an RE located between DMRSs included in different PRGs is the first area, but there may not be an RE to be additionally determined as the first area in the embodiment of FIG. 9.

Afterwards, because the delay spread is less than the threshold delay value, the processor 120 may determine that an RE located outside a DMRS in a first direction is the first area, but there may not be an RE to be additionally determined as the first area in the embodiment of FIG. 9.

Thereafter, when the Doppler frequency is greater than or equal to the threshold frequency value, an RE located outside the DMRS in a second direction may not be determined as the first area.

Finally, the processor 120 may determine that an RE with a symbol index of 12 or 13, which is not determined as the first area, constitutes the second area.

Referring back to FIG. 5, in operation S520, the wireless communication device 100 may segment the second area into a plurality of segmentation areas by using the processor 120. The processor 120 may segment the second area into the plurality of segmentation areas, based on the delay spread and the Doppler frequency. A more detailed method by which the processor 120 segments the second area into the plurality of segmentation areas may be described with reference to FIGS. 10, 14, and 16.

FIG. 10 is a flowchart of an example of a method of segmenting a second area into a plurality of segmentation areas in a wireless communication device according to one or more embodiments.

Referring to FIG. 10, in operation S1010, the wireless communication device 100 may determine, by using the processor 120, whether a delay spread is greater than a first delay value. Because a delay spread value is great, the first delay value may serve as a criterion for judging whether a change in channel estimation error due to a change in frequency is great. In this case, the first delay value may be greater than a threshold delay value.

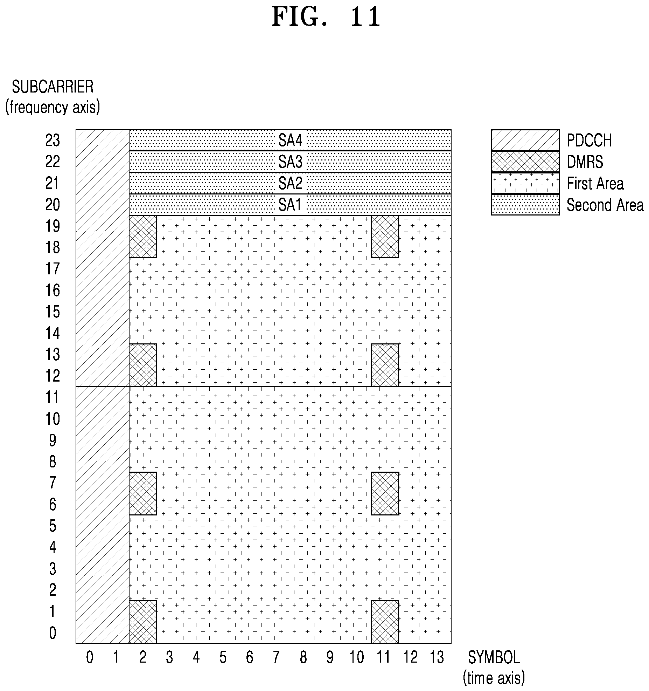

When it is determined that the delay spread is greater than the first delay value, the process may proceed to operation S1020. Thus, the wireless communication device 100 may segment, by using the processor 120, a first portion of the second area into a plurality of segmentation areas by dividing the first portion of the second area into subcarrier units (e.g., a first subcarrier unit corresponding to SA1, a second subcarrier unit corresponding to SA2, a third subcarrier unit corresponding to SA3, and a fourth subcarrier unit corresponding to SA4 in FIG. 11, where the first, second, third, and fourth subcarrier units have the subcarrier indices of 20, 21, 22, and 23, respectively). In this case, the first portion may be a portion located outside a DMRS in a first direction.

Conversely, when it is determined that the delay spread is not greater than the first delay value, the process may proceed to operation S1030. Thus, the wireless communication device 100 may determine, by using the processor 120, whether a Doppler frequency is greater than a first frequency value. Because a Doppler frequency value is great, the first frequency value may be a value that serves as a criterion for judging whether a change in channel estimation error over time is great. In this case, the first frequency value may be greater than a threshold frequency value.

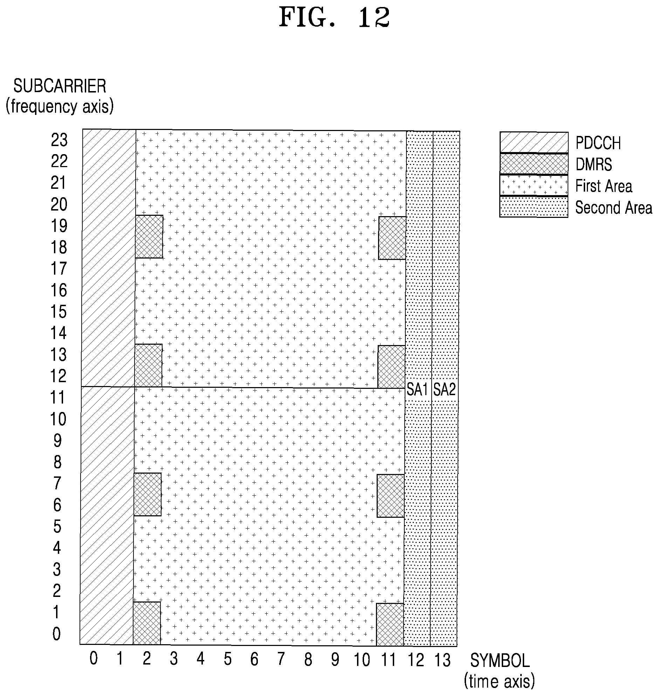

When it is determined that the Doppler frequency is greater than the first frequency value, the process may proceed to operation S1040. Thus, the wireless communication device 100 may segment, by using the processor 120, a second portion of the second area into a plurality of segmentation areas by dividing the second portion of the second area into symbol units (e.g., a first symbol unit corresponding to SA1 and a second symbol unit corresponding to SA2 in FIG. 12, where the first and second symbol units have the symbol indices of 12 and 13, respectively). In this case, the second portion may be a portion located outside the DMRS in a second direction.

When it is determined that the Doppler frequency is not greater than the first frequency value, the wireless communication device 100 may terminate, by using the processor 120, the operation of segmenting the second area into the plurality of segmentation areas.

An example of segmenting the second area into the plurality of segmentation areas through processes, such as operations S1010 to S1040, is provided with reference to FIGS. 11 to 13.

FIG. 11 is a diagram of an example of segmenting a second area into a plurality of segmentation areas in an RE area, based on an operating method of a wireless communication device, according to one or more embodiments.

Referring to FIG. 11, an example of determining the RE area as a first area and the plurality of segmentation areas is provided. In the embodiment of FIG. 11, each of REs with a symbol index of 0 or 1 may be an RE to which a PDCCH is assigned. Also, each of REs with a symbol index of 2 or 11 and a subcarrier index of 0, 1, 6, 7, 12, 13, 18, or 19 may be an RE to which a DMRS is assigned. An RE to which the PDCCH and the DMRS are not assigned may be an RE to which a PDSCH is assigned. In the embodiment of FIG. 11, a delay spread may be assumed to be greater than or equal to a threshold delay value and a first delay value, and a Doppler frequency may be assumed to be less than a threshold frequency value. In this case, the processor 120 may determine the first area and the second area as shown in FIG. 11 by using the method described above with reference to FIG. 6.

To begin with, because the delay spread is greater than the first delay value, the processor 120 may segment a first portion of the second area into a plurality of segmentation areas by dividing the first portion of the second area into subcarrier units. In the embodiment of FIG. 11, the processor 120 may segment an RE with a subcarrier index of 20 to 23, which is a portion of the second area located outside a DMRS in a first direction, into the plurality of segmentation areas by dividing the portion of the second area into subcarrier units. The processor 120 may determine that an RE with a subcarrier index of 20 is a first segmentation area SA1. The processor 120 may determine that an RE with a subcarrier index of 21 is a second segmentation area SA2. The processor 120 may determine that an RE with a subcarrier index of 22 is a third segmentation area SA3. The processor 120 may determine that an RE with a subcarrier index of 23 is a fourth segmentation area SA4. The processor 120 may segment the second area into the plurality of segmentation areas as described above.

Thereafter, because the Doppler frequency is less than the threshold frequency value that is less than a first frequency value, the processor 120 may not segment a second portion of the second area into a plurality of segmentation areas by dividing the second portion of the second area into symbol units.

FIG. 12 is a diagram of another example of segmenting a second area into a plurality of segmentation areas in an RE area, based on an operating method of a wireless communication device, according to one or more embodiments.

Referring to FIG. 12, another example of determining the RE area as a first area and the plurality of segmentation areas is provided. In the embodiment of FIG. 12, each of REs with a symbol index of 0 or 1 may be an RE to which a PDCCH is assigned. Also, each of REs with a symbol index of 2 or 11 and a subcarrier index of 0, 1, 6, 7, 12, 13, 18, or 19 may be an RE to which a DMRS is assigned. An RE to which the PDCCH and the DMRS are not assigned may be an RE to which a PDSCH is assigned. In the embodiment of FIG. 12, a delay spread may be assumed to be less than a threshold delay value, and a Doppler frequency may be assumed to be greater than or equal to a threshold frequency value and a first frequency value. In this case, the processor 120 may determine the first area and the second area as shown in FIG. 12 by using the method described above with reference to FIG. 6.

To begin with, because the delay spread is less than the threshold delay value that is less than a first delay value, the processor 120 may not segment a first portion of the second area into a plurality of segmentation areas by dividing the first portion of the second area into subcarrier units.

Next, because the Doppler frequency is greater than the first frequency value, the processor 120 may segment a second portion of the second areas into a plurality of segmentation areas by dividing the second portion of the second area into symbol units. In the embodiment of FIG. 12, the processor 120 may segment the second portion, which has symbol indices ranging from 12 to 13 and subcarrier indices ranging from 0 to 23, into two different segmentation areas SA1 and SA2 based on the symbol indices. In the second portion, REs with the symbol index of 12 may be grouped into the first segmentation area SA1, while REs with the symbol index of 13 may be grouped into the second segmentation area SA2. The second portion of the second area may be located outside the DMRS in a second direction. The processor 120 may determine that an RE with a symbol index of 12 belongs to a first segmentation area SA1. The processor 120 may determine that an RE with a symbol index of 13 belongs to a second segmentation area SA2. The processor 120 may segment the second portion of the second area into the plurality of segmentation areas as described above.

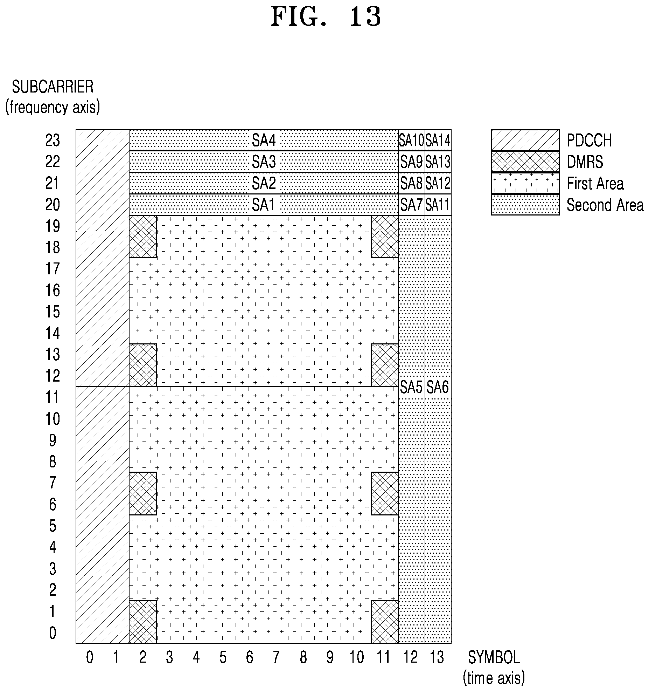

FIG. 13 is a diagram of another example of segmenting a second area into a plurality of segmentation areas in an RE area, based on an operating method of a wireless communication device, according to one or more embodiments.

Referring to FIG. 13, another example of determining the RE area as a first area and the plurality of segmentation areas is provided. In the embodiment of FIG. 13, each of REs with a symbol index of 0 or 1 may be an RE to which a PDCCH is assigned. Also, each of REs with a symbol index of 2 or 11 and a subcarrier index of 0, 1, 6, 7, 12, 13, 18, or 19 may be an RE to which a DMRS is assigned. An RE to which the PDCCH and the DMRS are not assigned may be an RE to which a PDSCH is assigned. In the embodiment of FIG. 13, a delay spread may be assumed to be greater than or equal to a threshold delay value and a first delay value, and a Doppler frequency may be assumed to be greater than or equal to a threshold frequency value and a first frequency value. In this case, the processor 120 may determine the first area and the second area as shown in FIG. 13 by using the method described above with reference to FIG. 6.

To begin with, because the delay spread is greater than the first delay value, the processor 120 may segment a first portion of the second area into a plurality of segmentation areas by dividing the first portion of the second area into subcarrier units. In the embodiment of FIG. 13, the processor 120 may segment the first portion with a subcarrier index of 20 to 23, which is a portion of the second area located outside the DMRS in a first direction, into a plurality of segmentation areas by dividing the RE into subcarrier units. The processor 120 may determine that an RE with a subcarrier index of 20 belongs to a first segmentation area SA1. The processor 120 may determine that an RE with a subcarrier index of 21 belongs to a second segmentation area SA2. The processor 120 may determine that an RE with a subcarrier index of 22 belongs to a third segmentation area SA3. The processor 120 may determine that an RE with a subcarrier index of 23 belongs to a fourth segmentation area SA4.

Next, because the Doppler frequency is greater than the first frequency value, the processor 120 may segment a second portion of the second area into a plurality of segmentation areas by dividing the second portion of the second area into symbol units. In the embodiment of FIG. 13, the processor 120 may segment an area of the second portion, which has symbol indices ranging from 12 to 13 and subcarrier indices ranging from 0 to 19, into two different segmentation areas SA5 and SA6 based on the symbol indices. The processor 120 may determine that an RE with a symbol index of 12 belongs to a fifth segmentation area SA5. The processor 120 may determine that an RE with a symbol index of 13 belongs to a sixth segmentation area SA6.

In this case, because the delay spread is greater than the first delay value and the Doppler frequency is greater than the first frequency value, the processor 120 may segment an overlapping area of the first portion and the second portion, which has symbol indices ranging from 12 to 13 and subcarrier indices ranging from 20 to 23, into eight (8) different segmentation areas SA7-SA14 based on subcarrier units and symbol units. In the embodiment of FIG. 13, the processor 120 may determine that an RE with a symbol index of 12 and a subcarrier index of 20 belongs to a seventh segmentation area SA7. The processor 120 may determine that an RE with a symbol index of 12 and a subcarrier index of 21 belongs to an eighth segmentation area SA8. The processor 120 may determine that an RE with a symbol index of 12 and a subcarrier index of 22 belongs to a ninth segmentation area SA9. The processor 120 may determine that an RE with a symbol index of 12 and a subcarrier index of 23 belongs to a tenth segmentation area SA10. The processor 120 may determine that an RE with a symbol index of 13 and a subcarrier index of 20 belongs to an eleventh segmentation area SA11. The processor 120 may determine that an RE with a symbol index of 13 and a subcarrier index of 21 belongs to a twelfth segmentation area SA12. The processor 120 may determine that an RE with a symbol index of 13 and a subcarrier index of 22 belongs to a thirteenth segmentation area SA13. The processor 120 may determine that an RE with a symbol index of 13 and a subcarrier index of 23 belongs to a fourteenth segmentation area SA14. The processor 120 may segment the second area into the plurality of segmentation areas as described above.

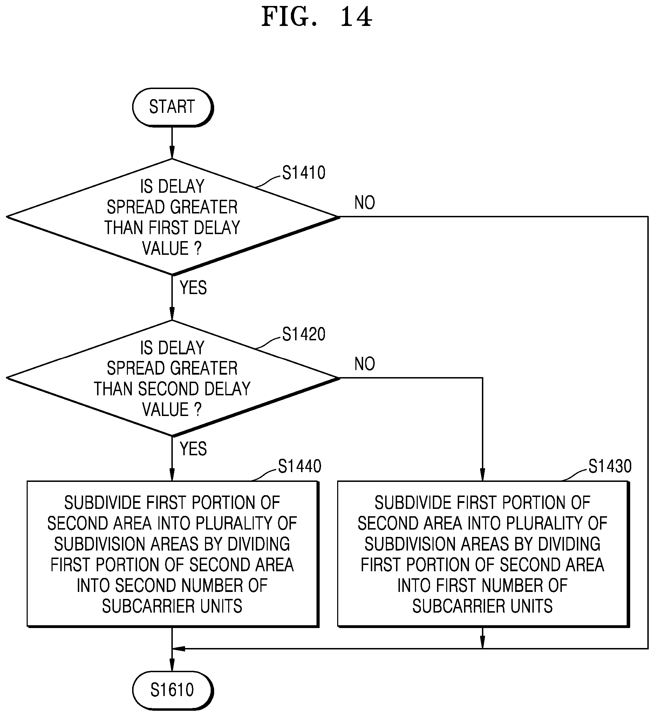

FIG. 14 is a flowchart of an example of a method of segmenting a second area into a plurality of segmentation areas, based on a delay spread, in a wireless communication device according to one or more embodiments.

Referring to FIG. 14, in operation S1410, the wireless communication device 100 may determine, by using a processor 120, whether the delay spread is greater than a first delay value. Operation S1410 may be the same as operation S1010.

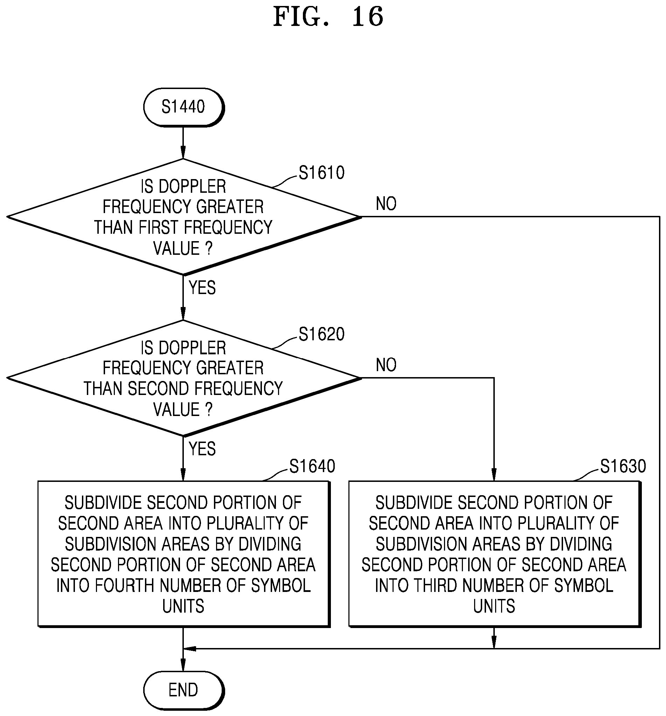

When it is determined that the delay spread is not greater than the first delay value, the process may proceed to operation S1610 of FIG. 16 described below.

When it is determined that the delay spread is greater than the first delay value, the process may proceed to operation S1420, and the wireless communication device 100 may determine, by using the processor 120, whether the delay spread is greater than a second delay value that is greater than the first delay value.

When it is determined that the delay spread is greater than the first delay value and less than the second delay value, the process may proceed to operation S1430. Thus, the wireless communication device 100 may segment, by using the processor 120, a first portion of the second area into a plurality of segmentation areas by dividing the first portion of the second area into a first number of subcarrier units.

When it is determined that the delay spread is greater than the first delay value and greater than the second delay value, the process may proceed to operation S1440, and the wireless communication device 100 may segment, by using the processor 120, a first portion of the second area into the plurality of segmentation areas by dividing the first portion into a second number of subcarrier units. The second number may be greater than the first number. As described above, the wireless communication device 100 may segment a plurality of segmentation areas more finely as a delay spread increases. Thus, the influence of channel estimation errors upon the wireless communication device 100 may be compensated more accurately.

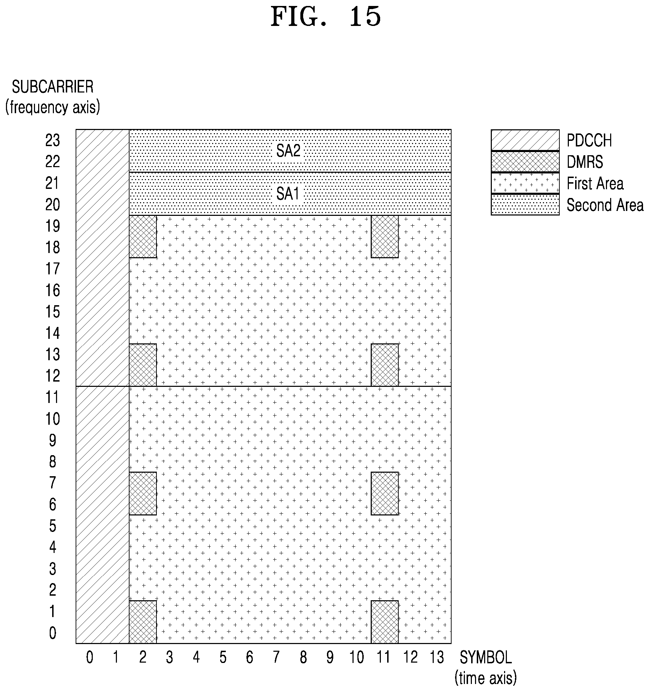

For example, when the first portion of the second area includes four subcarrier indices, the first number may be two, and the second number may be four. In this case, an example of segmenting the first portion of the second area into the plurality of segmentation areas by dividing the first portion of the second area into the second number of subcarrier units may be as shown in FIG. 11, and an example of segmenting the first portion of the second area into the plurality of segmentation areas by dividing the first portion of the second area into the first number of subcarrier units may be ass shown in FIG. 15.

FIG. 15 is a diagram of an example of segmenting a second area into a plurality of segmentation areas, based on a delay spread, in an RE area, by using an operating method of a wireless communication device, according to one or more embodiments.

Referring to FIG. 15, an example of determining the RE area as a first area and the plurality of segmentation areas is provided. In the embodiment of FIG. 15, each of REs with a symbol index of 0 or 1 may be an RE to which a PDCCH is assigned. Also, each of REs with a symbol index of 2 or 11 and a subcarrier index of 0, 1, 6, 7, 12, 13, 18, or 19 may be an RE to which a DMRS is assigned. An RE to which the PDCCH and the DMRS are not assigned may be an RE to which a PDSCH is assigned. In the embodiment of FIG. 15, the delay spread may be assumed to be greater than or equal to a threshold delay value and a first delay value or less than a second delay value, and a Doppler frequency may be assumed to be less than a threshold frequency value. In this case, the processor 120 may determine the first area and the second area as shown in FIG. 15 by using the method described above with reference to FIG. 6.

Because the delay spread is greater than the first delay value and less than the second delay value, the processor 120 may segment a first portion of the second area into a plurality of segmentation areas by dividing the first portion of the second area into a first number (e.g., two) of subcarrier units. In the embodiment of FIG. 15, the processor 120 may segment an RE with a subcarrier index of 20 to 23, which is a portion of the second area located outside the DMRS in a first direction, into two segmentation areas on a subcarrier basis. The processor 120 may determine that an RE with a subcarrier index of 20 or 21 belongs to a first segmentation area SA1. The processor 120 may determine that an RE with a subcarrier index of 22 or 23 belongs to a second segmentation area SA2.

FIG. 16 is a flowchart of an example of a method of segmenting a second area into a plurality of segmentation areas, based on a Doppler frequency, in a wireless communication device according to one or more embodiments.

Referring to FIG. 16, in operation S1610, the wireless communication device 100 may determine, by using a processor 120, whether a Doppler frequency is greater than a first frequency value. Operation S1610 may be the same as operation S1030.

When it is determined that the Doppler frequency is not greater than the first frequency value, the wireless communication device 100 may terminate, by using the processor 120, an operation of dividing the second area into the plurality of segmentation areas.

When it is determined that the Doppler frequency is greater than the first frequency value, the process may proceed to operation S1620, and the wireless communication device 100 may determine, by using the processor 120, whether the Doppler frequency is greater than a second frequency value that is greater than the first frequency value.

When it is determined that the Doppler frequency is greater than the first frequency value and less than the second frequency value, the process may proceed to operation S1630, and thus, the wireless communication device 100 may segment, by using the processor 120, a second portion of the second area into a plurality of segmentation areas by dividing the second portion of the second area into a third number of symbol units.

When it is determined that the Doppler frequency is greater than the first frequency value and greater than the second frequency value, the process may proceed to operation S1640. Thus, the wireless communication device 100 may segment, by using the processor 120, the second portion of the second area into a plurality of segmentation areas by dividing the second portion of the second area into a fourth number of symbol units. The fourth number may be greater than the third number. As described above, the wireless communication device 100 may segment a plurality of segmentation areas more finely as a Doppler frequency increases. Thus, the influence of channel estimation errors upon the wireless communication device 100 may be compensated more accurately.

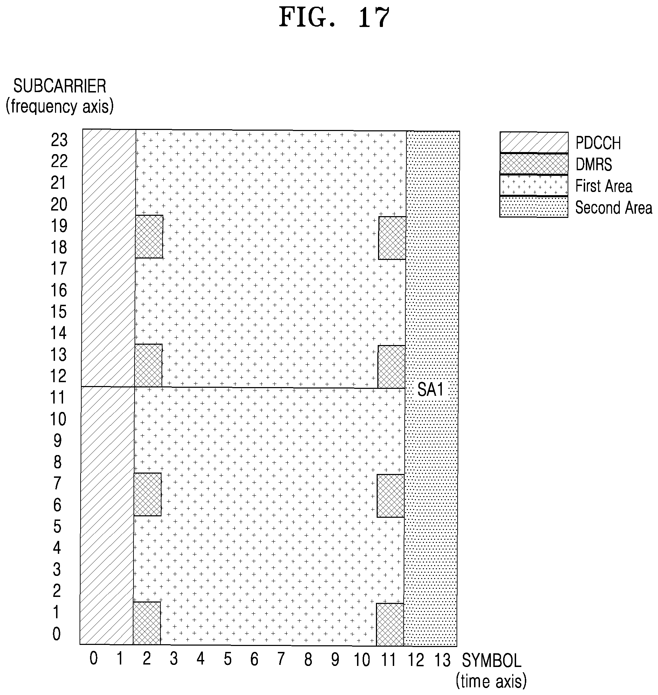

For example, when the second portion of the second area includes two symbol indices, the third number may be one, and the fourth number may be two. In this case, an example of segmenting the second portion of the second area into the plurality of segmentation areas by dividing the second portion of the second area into the fourth number of symbol units may be as shown in FIG. 12, and an example of segmenting the second portion of the second area into the plurality of segmentation areas by dividing the second portion of the second area into the third number of symbol units may be ass shown in FIG. 17.

FIG. 17 is a diagram of an example of segmenting a second area into a plurality of segmentation areas, based on a Doppler frequency, in an RE area by using an operating method of a wireless communication device according to one or more embodiments.

Referring to FIG. 17, an example of determining the RE area as a first area and the plurality of segmentation areas is provided. In the embodiment of FIG. 17, a PDCCH may be assigned to each of REs with a symbol index of 0 or 1. Also, a DMRS may be assigned to each of REs with a symbol index of 2 or 11 and a subcarrier index of 0, 1, 6, 7, 12, 13, 18, or 19. A PDSCH may be assigned to REs to which neither the PDCCH nor the

DMRS are assigned. In the embodiment of FIG. 17, a delay spread may be assumed to be less than a threshold frequency value, and a Doppler frequency may be assumed to be greater than or equal to the threshold frequency value and the first frequency value or less than the second frequency value. In this case, the processor 120 may determine the first area and the second area as shown in FIG. 17 by using the method described above with reference to FIG. 6.

Because the Doppler frequency is greater than the first frequency value and less than the second frequency value, the processor 120 may segment a second portion of the second area into a plurality of segmentation areas by dividing the second portion of the second area into a third number (e.g., one) of symbol units. In the embodiment of FIG. 17, the processor 120 may segment an RE with a symbol index of 12 to 13, which is a portion of the second area located outside the DMRS in a second direction, into one segmentation area on a symbol basis. The processor 120 may determine that an RE with a symbol index of 12 or 13 belongs to a first segmentation area SA1.

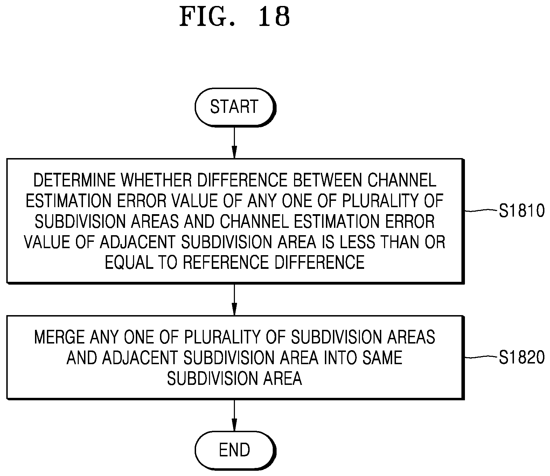

Referring back to FIG. 5, the processor 120 may divide the second area into the plurality of segmentation areas, based on the delay spread and the Doppler frequency, and then merge some of the plurality of segmentation areas into the same segmentation area. A more detailed method by which the processor 120 merges some of the plurality of segmentation areas into the same segmentation area may be described with reference to FIG. 18.

FIG. 18 is a flowchart of an example of a method of merging a plurality of segmentation areas with adjacent segmentation areas having similar channel estimation error values, by using an operating method of a wireless communication device according to one or more embodiments.

Referring to FIG. 18, in operation S1810, the wireless communication device 100 may determine, by using a processor 120, whether a difference between a channel estimation error value of any one of the plurality of segmentation areas and a channel estimation error value of an adjacent segmentation area is less than or equal to a reference difference. In this case, the reference difference may be a predetermined threshold value. The processor 120 may determine that the channel estimation error values are similar when the differences the channel estimation error values are less than the predetermined threshold value. The reference difference may be experimentally determined. That is, the processor 120 may determine whether a channel estimation error value of each of the plurality of segmentation areas is similar to a channel estimation error value of the adjacent segmentation area.

In operation S1820, the wireless communication device 100 may merge, by using the processor 120, the any one of the plurality of segmentation areas and the adjacent segmentation area into the same segmentation area. That is, when the difference between the channel estimation error value of the any one of the plurality of segmentation areas and the channel estimation error value of the adjacent segmentation area is less than or equal to the reference difference in operation S1810, the processor 120 may merge the any one of the plurality of segmentation areas and the adjacent segmentation area into the same segmentation area.

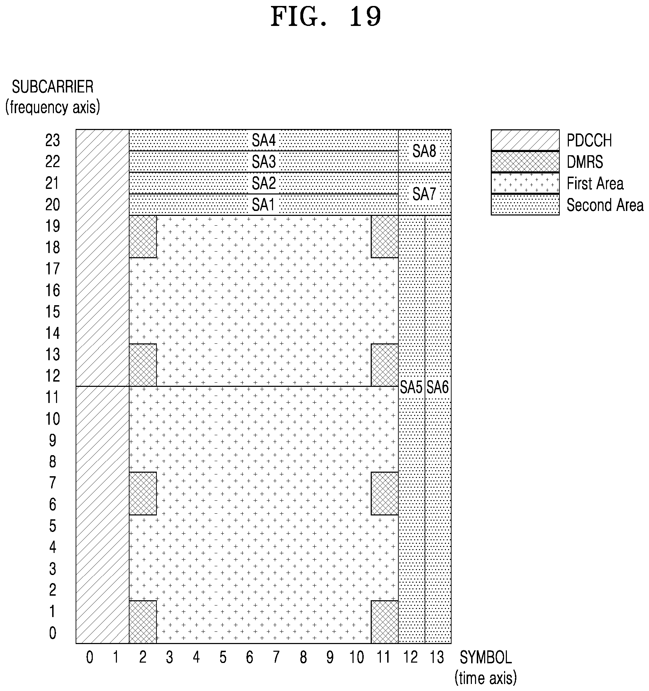

An example of merging a second area and some of the plurality of segmentation areas into the same segmentation area through processes, such as operations S1810 to S1820 is provided with reference to FIG. 19.

FIG. 19 is a diagram of an example of merging a plurality of segmentation areas with adjacent segmentation areas having similar channel estimation error values in an RE area, by using an operating method of a wireless communication device according to one or more embodiments.

Referring to FIG. 19, an example of merging some of the plurality of segmentation areas into the same segmentation area, based on a channel estimation error value, in a state in which a second area is segmented into the plurality of segmentation areas as shown in FIG. 13, is provided.

The processor 120 may determine that a difference in channel estimation error value among the seventh segmentation area SA7, the eighth segmentation area SA8, the eleventh segmentation area SA11, and the twelfth segmentation area SA12 of FIG. 13 is less than or equal to a reference difference. In this case, the processor 120 may merge the seventh segmentation area SA7, the eighth segmentation area SA8, the eleventh segmentation area SA11, and the twelfth segmentation area SA12 of FIG. 13 with the seventh segmentation area SA7 of FIG. 19.

It is additionally noted that the processor 120 may determine that a difference in channel estimation error value among the ninth segmentation area SA9, the tenth segmentation area SA10, the thirteenth segmentation area SA13, and the fourteenth segmentation area SA14 of FIG. 13 is less than or equal to the reference difference. In this case, the processor 120 may merge the ninth segmentation area SA9, the tenth segmentation area SA10, the thirteenth segmentation area SA13, and the fourteenth segmentation area SA14 of FIG. 13 with the eighth segmentation area SA8 of FIG. 19.

Referring back to FIG. 5, in operation S530, the wireless communication device 100 may calculate, by using the processor 120, a first adjustment whitening filter and a plurality of segmentation adjustment whitening filters to be respectively applied to the first area and the plurality of segmentation areas. The processor 120 may calculate, by using an average noise interference value, the first adjustment whitening filter and the plurality of segmentation adjustment whitening filters. A more detailed method by which the processor 120 calculates, by using the average noise interference value, the first adjustment whitening filter and the plurality of segmentation adjustment whitening filters may be described with reference to FIG. 20.

FIG. 20 is a flowchart of an example of a method of calculating a first adjustment whitening filter and a plurality of segmentation adjustment whitening filters in a wireless communication device according to one or more embodiments.

Referring to FIG. 20, in operation S2010, the wireless communication device 100 may calculate, by using a processor 120, a DMRS average noise interference value from REs with a DMRS assigned thereto, which are included in an RE area. The DMRS average noise interference value may be calculated by using Equation 5:

[Equation 5]

$$NIV_{DMRS} = \sum_{i=1}^{n_r} \sum_{(k,l) \in A_{DMRS}} R_{ii}(k, l)$$

wherein $NIV_{DMRS}$ may denote the DMRS average noise interference value, $n_r$ may denote the number of receiving antennas, $A_{DMRS}$ may denote a set of REs to which a DMRS is assigned, and $R_{ii}(k, l)$ may denote a value corresponding to an i-th row and an i-th column of a noise covariance matrix of an RE with a subcarrier index of k and a symbol index of l, from among the REs to which the DMRS is assigned.

In operation S2020, the wireless communication device 100 may calculate, by using the processor 120, a first average noise interference value, from among REs included in a first area. The first average noise interference value may be calculated by using Equation 6:

[Equation 6]

$$NIV_1 = \sum_{i=1}^{n_r} \sum_{(k,l) \in A_1} R_{ii}(k, l)$$

wherein $NIV_1$ may denote the first average noise interference value, $A_1$ may denote a set of REs included in the first area,

$R_{ii}(k, l)$ may denote a value corresponding to an i-th row and an i-th column of a noise covariance matrix of an RE with a subcarrier index of k and a symbol index of l, from among the REs included in the first area.

In operation S2030, the wireless communication device 100 may calculate, by using the processor 120, a plurality of segmentation average noise interference values from REs included in each of a plurality of segmentation areas. The plurality of segmentation average noise interference values may be calculated by using Equation 7:

[Equation 7]

$$NIV_{2,m} = \sum_{i=1}^{n_r} \sum_{(k,l) \in A_{2,m}} R_{ii}(k, l)$$

wherein m may denote an index of the plurality of segmentation areas, $NIV_{2,m}$ may denote an m-th segmentation average noise interference value, $A_{2,m}$ may denote a set of REs included in an m-th segmentation area, and $R_{ii}(k, l)$ may denote a value corresponding to an i-th row and an i-th column of a noise covariance matrix of an RE with a subcarrier index of k and a symbol index of l, from among REs included in the m-th segmentation area.

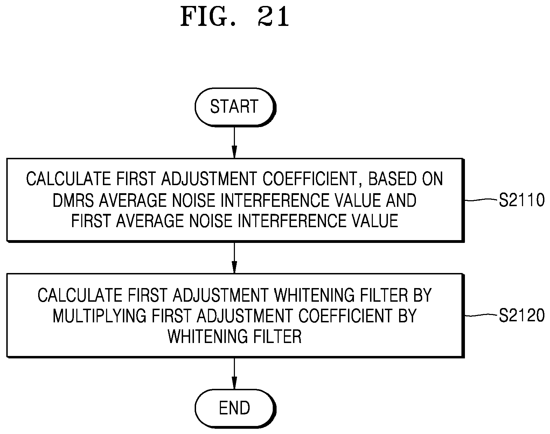

In operation S2040, the wireless communication device 100 may calculate the first adjustment whitening filter, based on the DMRS average noise interference value and the first average noise interference value, by using the processor 120. A more detailed method of calculating the first adjustment whitening filter may be described with reference to FIG. 21.

FIG. 21 is a flowchart of an example of a specific method of calculating a first adjustment whitening filter in a wireless communication device according to one or more embodiments.

Referring to FIG. 21, in operation S2110, the wireless communication device 100 may calculate a first adjustment coefficient, based on a DMRS average noise interference value and a first average noise interference value, by using the processor 120. The first adjustment coefficient may be a coefficient for adjusting a whitening filter to be applied to an RE included in a first area. The first adjustment coefficient may be calculated by using Equation 8:

[Equation 8]

$$\alpha_1 = \sqrt{\frac{NIV_{DMRS}}{NIV_1}}$$

wherein $\alpha_1$ may denote the first adjustment coefficient.

In operation S2120, the wireless communication device 100 may calculate, by using the processor 120, the first adjustment whitening filter by multiplying the first adjustment coefficient by a whitening filter. The first adjustment whitening filter may be calculated by using Equation 9:

[Equation 9]

$$\widetilde{W_1} = \alpha_1 W$$

wherein $\widetilde{W_1}$ may denote the first adjustment whitening filter, and W may denote a whitening filter.

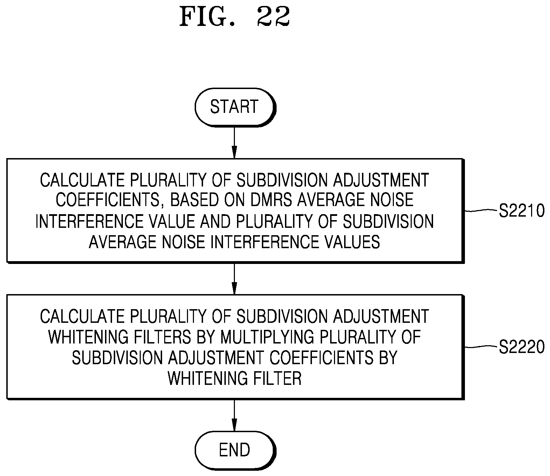

Referring back to FIG. 20, in operation S2050, the wireless communication device 100 may calculate a plurality of segmentation adjustment whitening filters, based on the DMRS average noise interference value and the plurality of segmentation average noise interference values, by using the processor 120. A more detailed method of calculating the plurality of segmentation adjustment whitening filters may be described with reference to FIG. 22.

FIG. 22 is a flowchart of an example of a specific method of calculating a plurality of segmentation adjustment whitening filters in a wireless communication device 100 according to one or more embodiments.

Referring to FIG. 22, in operation S2210, the wireless communication device 100 may calculate a plurality of segmentation adjustment coefficients by using a processor 120, based on a DMRS average noise interference value and a plurality of segmentation average noise interference values. Each of the plurality of segmentation adjustment coefficients may be a coefficient for adjusting a whitening filter to be an RE included in each of a plurality of segmentation areas. The plurality of segmentation adjustment coefficients may be calculated by using Equation 10:

[Equation 10]

$$\alpha_{2,m} = \sqrt{\frac{NIV_{DMRS}}{NIV_{2,m}}}$$

wherein m may denote an index of the plurality of segmentation areas, and $\alpha_{2,m}$ may denote an m-th segmentation adjustment coefficient.

In operation S2220, the wireless communication device 100 may calculate the plurality of segmentation adjustment whitening filters by multiplying the plurality of segmentation adjustment coefficients by a whitening filter, by using the processor 120. The plurality of segmentation adjustment whitening filters may be calculated by using Equation 11:

[Equation 11]

$$\widetilde{W_{2,m}} = \alpha_{2,m} W$$

wherein $\widetilde{W_{2,m}}$ may denote an m-th segmentation adjustment whitening filter.

Referring back to FIG. 5, in operation S540, the wireless communication device 100 may perform, by using the processor 120, an interference whitening operation on a first area and the plurality of segmentation areas, based on a first adjustment whitening filter and the plurality of segmentation adjustment whitening filters. The processor 120 may perform an interference whitening operation by respectively multiplying the first adjustment whitening filter and the plurality of segmentation adjustment whitening filters by wireless signals respectively received through the first area and the plurality of segmentation areas, as shown in Equation 12 and Equation 13:

[Equation 12]

$$\widetilde{y_1} = \widetilde{W_1} y_1$$

[Equation 13]

$$\widetilde{y_{2,m}} = \widetilde{W_{2,m}} y_{2,m}$$

In Equation 12, $y_1$ may denote a wireless signal received through an RE included in the first area, and $\widetilde{y_1}$ may denote a whitening wireless signal generated by whitening, by using the first adjustment whitening filter, the wireless signal received through the RE included in the first area.

In Equation 13, m may denote an index of the plurality of segmentation areas, $y_{2,m}$, may denote a wireless signal received through an RE included in an m-th segmentation area, and $\widetilde{y_{2,m}}$ may denote a whitening wireless signal generated by whitening, by using the m-th segmentation adjustment whitening filter, the wireless signal received through the RE included in the m-th segmentation area.

As described above, the wireless communication device 100 according to the one or more embodiments may appropriately compensate for a channel estimation error by performing an interference whitening operation on the first area and the plurality of segmentation areas using different whitening filters. Thus, the communication performance of the wireless communication device 100 may improve.

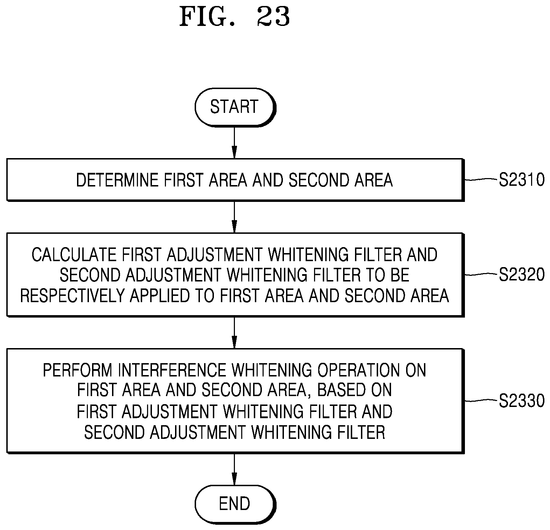

FIG. 23 is a flowchart of another example of a method of performing an interference whitening operation in a wireless communication device according to one or more embodiments.

Referring to FIG. 23, in operation S2310, the wireless communication device 100 may determine, by using a processor 120, a first area and a second area in an RE area including a plurality of REs. Operation S2310 may be the same as operation S510 of FIG. 5.

In operation S2320, the wireless communication device 100 may calculate a first adjustment whitening filter and a second adjustment whitening filter to be respectively applied to the first area and the second area, by using the processor 120. In the embodiment of FIG. 23, unlike in the embodiment of FIG. 5, the first adjustment whitening filter and the second adjustment whitening filter to be respectively applied to the first area and the second area may be calculated without segmenting the second area into a plurality of segmentation areas. A method of calculating the first adjustment whitening filter may be the same as the method of calculating the first adjustment whitening filter in the embodiment of FIG. 5. The second adjustment whitening filter may be calculated by applying the method of calculating the first adjustment whitening filter to the second area in the embodiment of FIG. 5.

In operation S2330, the wireless communication device 100 may perform an interference whitening operation on the first area and the second area, based on the first adjustment whitening filter and the second adjustment whitening filter, by using the processor 120. The processor 120 may perform an interference whitening operation by respectively multiplying the first adjustment whitening filter and the second adjustment whitening filter by wireless signals respectively received through the first area and the second area.

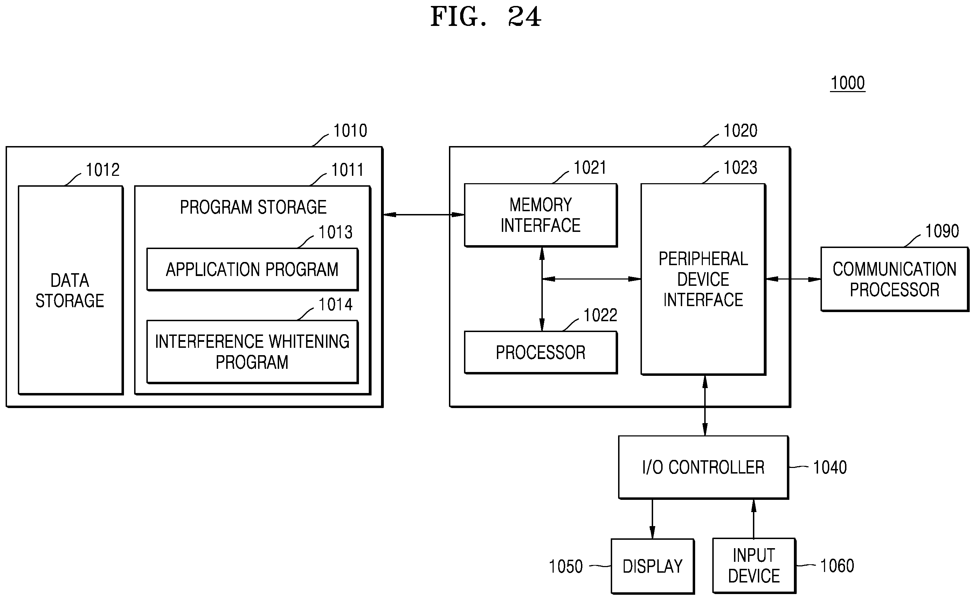

FIG. 24 is a block diagram of an electronic device 1000 according to one or more embodiments.

Referring to FIG. 24, the electronic device 1000 may include preferably each of a memory 1010, a processor unit 1020, an input/output (I/O) controller 1040, a display 1050, an input device 1060, and a communication processor 1090. Here, the memory 1010 may be provided in plural. Each of components of the electronic device 1000 are now described.

The memory 1010 may include a program storage 1011 configured to store a program for controlling an operation of the electronic device 1000 and a data storage 1012 configured to store data generated during the execution of the program. The data storage 1012 may store data required for operations of an application program 1013 and an interference whitening program 1014 or store data generated due to the operations of the application program 1013 and the interference whitening program 1014.

The program storage 1011 may include the application program 1013 and the interference whitening program 1014. Here, programs included in the program storage 1011 may be a set of instructions and may be expressed as an instruction set. The application program 1013 may include pieces of program code for performing various applications that operate in the electronic device 1000. That is, the application program 1013 may include pieces of code (or commands) related to various applications run by a processor 1022.

According to embodiments, the interference whitening program 1014 may determine a first area and a second area in an RE area including a plurality of REs, segment the second area into a plurality of segmentation areas, calculate a first adjustment whitening filter and a plurality of segmentation adjustment whitening filters to be respectively applied to the first area and the plurality of segmentation areas, and perform an interference whitening operation on the first area and the plurality of segmentation areas, based on the first adjustment whitening filter and the plurality of segmentation adjustment whitening filters.

The electronic device 1000 may include the communication processor 1090 configured to perform a communication function for voice communication and data communication. A peripheral device interface 1023 may control connection among the I/O controller 1040, the communication processor 1090, the processor 1022, and a memory interface 1021. The processor 1022 may control a plurality of base stations to provide the services corresponding thereto by using at least one software program. In this case, the processor 1022 may execute at least one program stored in the memory 1010 and provide services corresponding to the at least one program.

The I/O controller 1040 may provide an interface between an I/O device, such as the display 1050 and the input device 1060, and the peripheral device interface 1023. The display 1050 may display status information, input text, moving pictures, and/or still pictures. For example, the display 1050 may display application program information driven by the processor 1022.

The input device 1060 may provide input data generated by selection of the electronic device 1000 to the processor unit 1020 through the I/O controller 1040. In this case, the input device 1060 may include a keypad including at least one hardware button and a touch pad configured to detect touch information. For example, the input device 1060 may provide touch information, such as touch, touch movement, and/or touch release that are detected via the touch pad, to the processor 1022 through the I/O controller 1040.

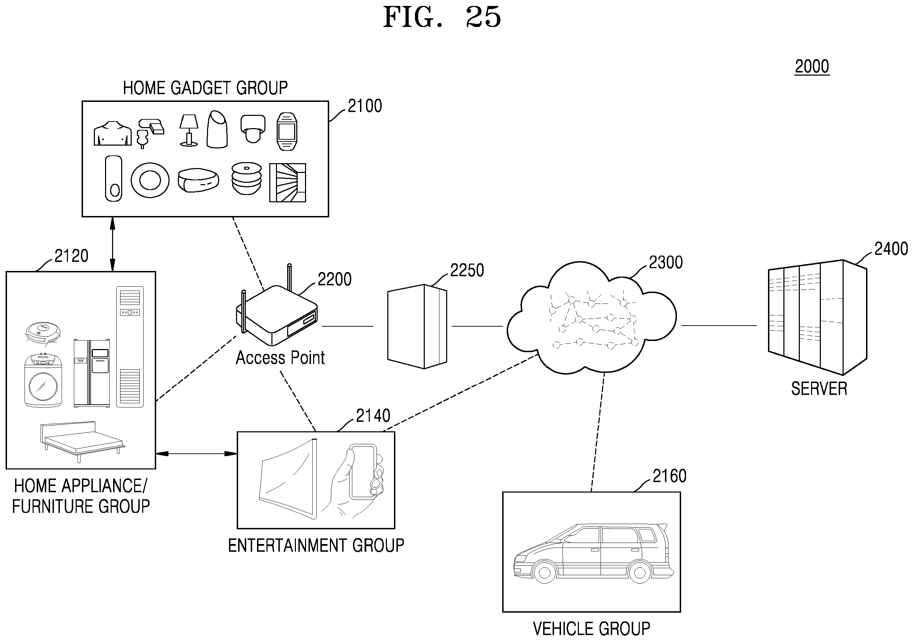

FIG. 25 is a conceptual diagram of an Internet of Things (IoT) network system according to one or more embodiments.

Referring to FIG. 25, the IoT network system 2000 may include a plurality of IoT devices (e.g., 2100, 2120, 2140, and 2160) and preferably each of an access point (AP) 2200, a gateway 2250, a wireless network 2300, and a server 2400. An IoT may refer to a network between things using wired/wireless communication. The IoT devices may be alternatively referred to as electronic devices.

Each of the IoT devices (e.g., 2100, 2120, 2140, and 2160) may form a group according to the characteristics thereof. For example, the IoT devices may be grouped into a home gadget group 2100, a home appliance/furniture group 2120, an entertainment group 2140, and/or a vehicle group 2160. The plurality of IoT devices (e.g., 2100, 2120, and 2140) may be connected to a communication network or another IoT device through the AP 2200. The AP 2200 may be embedded in one IoT device. The gateway 2250 may change a protocol such that the AP 2200 is connected to an external wireless network. The IoT devices (e.g., 2100, 2120, and 2140) may be connected to an external communication network through the gateway 2250. The wireless network 2300 may include the Internet and/or a public network. The plurality of IoT devices (e.g., 2100, 2120, 2140, and 2160) may be connected to the server 2400, which provides a predetermined service, through the wireless network 2300, and a user may use the service through at least one of the plurality of IoT devices (e.g., 2100, 2120, 2140, and 2160).

According to embodiments, the plurality of IoT devices (e.g., 2100, 2120, 2140, and 2160) may determine a first area and a second area in an RE area including a plurality of REs, segment the second area into a plurality of segmentation areas, calculate a first adjustment whitening filter and a plurality of segmentation adjustment whitening filters to be respectively applied to the first area and the plurality of segmentation areas, the first adjustment whitening filter, and perform an interference whitening operation on the first area and a plurality of segmentation areas, based on the plurality of segmentation adjustment whitening filters. As a result, channel estimation errors may in embodiments, be appropriately compensated to improve the communication performance of the plurality of IoT devices (e.g., 2100, 2120, 2140, and 2160).

The foregoing embodiments are merely examples and are not to be construed as limiting. The present teaching can be readily applied to other types of apparatuses. Also, the description of the embodiments is intended to be illustrative, and many alternatives, modifications, and variations will be apparent to those skilled in the art. The invention is defined by the claims.

## Claims

1. A wireless communication device (30, 100) comprising:

    a transceiver (110) configured to receive a wireless signal; and
    at least one processor (120) configured to:

    in a time-frequency domain, in which resources are allocated across subcarriers (204, 210) and symbols (202) in a given time slot for data transmission, determine a first area and a second area within a resource element, RE, area comprising a plurality of REs (212);
    segment the second area into a plurality of segmentation areas (SA1 - SA14);
    calculate a first adjustment whitening filter and a plurality of segmentation adjustment whitening filters to be respectively applied to the first area and the plurality of segmentation areas (SA1 - SA14); and
    perform an interference whitening operation on the first area and the plurality of segmentation areas (SA1 - SA14), based on the first adjustment whitening filter and the plurality of segmentation adjustment whitening filters, respectively.

2. The wireless communication device (30, 100) of claim 1, wherein the at least one processor (120) is further configured to determine the first area and the second area, based on a position of a demodulation reference signal,(DMRS, and a size of a precoding resource block group, PRG, in the time-frequency domain, and a delay spread and a Doppler frequency of the plurality of REs (212) included in the first area and the second area.

3. The wireless communication device (30, 100) of claim 2, wherein the at least one processor (120) is further configured to:

    determine that among the plurality of REs (212), a first RE located between DMRSs within a same PRG in the RE area belongs to the first area;
    determine that among the plurality of REs (212), a second RE located between DMRSs from different PRGs within the RE area belongs to the first area;
    determine that among the plurality of REs (212), a third RE located outside the DMRSs in a first direction belongs to the first area based on the delay spread of the third RE being less than a threshold delay value;
    determine that among the plurality of REs (212), a fourth RE located outside the DMRSs in a second direction belongs to the first area based on the Doppler frequency of the fourth RE being less than a threshold frequency value, and

determine that among the plurality of REs (212), a fifth RE, which does not belong to the first area, is assigned to the second area.

4. The wireless communication device (30, 100) of any preceding claim, wherein the at least one processor (120) is further configured to:

segment the second area into the plurality of segmentation areas (SA1 - SA14), based on a delay spread and a Doppler frequency of the plurality of REs (212) included in the second area.

5. The wireless communication device (30, 100) of claim 4, wherein the at least one processor (120) is further configured to:

divide a first portion of the second area into subcarrier units based on the delay spread being greater than a first delay value, and

divide a second portion of the second area into symbol units based on the Doppler frequency being greater than a first frequency value,

wherein the plurality of segmentation areas (SA1 - SA14) comprises the subcarrier units and the symbol units.

6. The wireless communication device (30, 100) of claim 4 or 5, wherein the at least one processor (120) is further configured to:

divide a first portion of the second area into a first number of subcarrier units based on the delay spread being greater than a first delay value,

divide the first portion of the second area into a second number of subcarrier units, based on the delay spread being greater than a second delay value, wherein the second number is greater than the first number, and the second delay value is greater than the first delay value,

divide a second portion of the second area into a third number of symbol units, based on the Doppler frequency being greater than a first frequency value, and

divide the second portion of the second area into a fourth number of symbol units, based on the Doppler frequency being greater than a second frequency value, wherein the fourth number is greater than the third number, and the second frequency value is greater than the first frequency value,

wherein the plurality of segmentation areas (SA1 - SA14) comprises the first number of subcarrier units, the second number of subcarrier units, the third number of symbol units, and the fourth number of symbol units.

7. The wireless communication device (30, 100) of any one of claims 4 to 6, wherein, based on a difference between a channel estimation error value of any one of the plurality of segmentation areas (SA1 - SA14) and a channel estimation error value of an adjacent segmentation area being less than or equal to a reference difference, the at least one processor (120) is further configured to merge the any one of the plurality of segmentation areas (SA1 - SA14) and the adjacent segmentation area into a same segmentation area.

8. The wireless communication device (30, 100) of any preceding claim, wherein the at least one processor (120) is further configured to:

calculate a DMRS average noise interference value from REs (212) assigned to a DMRS, among the plurality of REs (212) in the RE area;

calculate a first average noise interference value from REs (212) included in the first area, among the plurality of REs;

calculate a plurality of segmentation average noise interference values from REs (212) included in each of the plurality of segmentation areas (SA1 - SA14), among the plurality of REs (212);

calculate the first adjustment whitening filter, based on the DMRS average noise interference value and the first average noise interference value, and

calculate the plurality of segmentation adjustment whitening filters, based on the DMRS average noise interference value and the plurality of segmentation average noise interference values.

9. The wireless communication device (30, 100) of claim 8, wherein the at least one processor (120) is further configured to:

calculate a first adjustment coefficient, based on the DMRS average noise interference value and the first average noise interference value,
calculate the first adjustment whitening filter by multiplying the first adjustment coefficient by a whitening filter,
calculate a plurality of segmentation adjustment coefficients, based on the DMRS average noise interference value and the plurality of segmentation average noise interference values, and
calculate the plurality of segmentation adjustment whitening filters by multiplying the plurality of segmentation adjustment coefficients by the whitening filter.

10. The wireless communication device (30, 100) of any preceding claim, wherein the at least one processor (120) is further configured to perform a decoding operation, based on a whitening wireless signal obtained by performing the interference whitening operation.

11. An operating method of a wireless communication device (30, 100), the operating method comprising receiving a wireless signal through a transceiver (110) and performing, by at least one processor (120),:

a channel estimation operation, based on the wireless signal;
a noise covariance estimation operation, based on a result of performing the channel estimation operation;
a whitening filter calculation operation, based on a result of performing the noise covariance estimation operation; and
an interference whitening operation, based on a result of performing the whitening filter calculation operation, wherein the performing of the interference whitening operation comprises:

in a time-frequency domain, in which resources are allocated across subcarriers (204, 210) and symbols (202) in a given time slot for data transmission, determining a first area and a second area in a resource element, RE, area comprising a plurality of REs (212);
segmenting the second area into a plurality of segmentation areas (SA1 - SA14);
calculating a first adjustment whitening filter and a plurality of segmentation adjustment whitening filters to be respectively applied to the first area and the plurality of segmentation areas (SA1 - SA14); and
performing the interference whitening operation on the first area and the plurality of segmentation areas (SA1 - SA14), based on the first adjustment whitening filter and the plurality of segmentation adjustment whitening filters, respectively.

12. The operating method of claim 11, wherein the determining of the first area and the second area comprises determining the first area and the second area, based on a position of a demodulation reference signal, DMRS, and a size of a precoding resource block group, PRG, in the time-frequency domain, and a delay spread and a Doppler frequency of the plurality of REs (212)included in the first area and the second area.

13. The operating method of claim 12, wherein the determining of the first area and the second area comprises:

determining that among the plurality of REs (212), a first RE located between DMRSs within a same PRG in the RE area belongs to the first area;
determining that among the plurality of REs (212), a second RE located between DMRSs from different PRGs within the RE area belongs to the first area;
determining that among the plurality of REs (212), a third RE located outside the DMRS in a first direction belongs to the first area based on the delay spread of the third RE being less than a threshold delay value ;
determining that among the plurality of REs (212), a fourth RE located outside the DMRSs in a second direction belongs to the first area based on the Doppler frequency of the fourth RE being less than a threshold frequency value; and
determining that among the plurality of REs (212), a fifth RE, which does not belong to the first area, is assigned to the second area.

14. The operating method of any one of claims 11 to 13, wherein the segmenting of the second area into the plurality of segmentation areas (SA1 - SA14) comprises:
segmenting the second area into the plurality of segmentation areas (SA1 - SA14), based on a delay spread and a Doppler frequency of the plurality of REs (212) included in the second area.

15. The operating method of any one of claims 11 to 14, wherein the calculating of the first adjustment whitening filter and the plurality of segmentation adjustment whitening filters comprises:

calculating a demodulation reference signal, DMRS, average noise interference value from REs (212) assigned to a DMRS, among the plurality of REs (212) in the RE area;

calculating a first average noise interference value from REs (212) included in the first area, among the plurality of REs (212);

calculating a plurality of segmentation average noise interference values from REs (212) included in each of the plurality of segmentation areas (SA1 - SA14), among the plurality of REs (212);

calculating the first adjustment whitening filter, based on the DMRS average noise interference value and the first average noise interference value; and

calculating the plurality of segmentation adjustment whitening filters, based on the DMRS average noise interference value and the plurality of segmentation average noise interference values.

FIG. 1

# FIG. 2

WIRELESS COMMUNICATION DEVICE — 100

PROCESSOR — 120

TRANSCEIVER — 110

101_1

101_k

# FIG. 3

FRAME (214)

SUBFRAME (205)

. . .

SLOT (206)

$N_{BW}$ Subcarriers (204)

$N_{RB}$ Subcarriers (210)

RESOURCE ELEMENT (212)

RESOURCE BLOCK (208)

$N_{symb}$ OFDM symbols (202)

FREQUENCY

TIME

# FIG. 4

START

RECEIVE WIRELESS SIGNAL —— S410

PERFORM CHANNEL ESTIMATION OPERATION —— S420

PERFORM NOISE COVARIANCE ESTIMATION OPERATION —— S430

PERFORM WHITENING FILTER CALCULATION OPERATION —— S440

PERFORM INTERFERENCE WHITENING OPERATION —— S450

PERFORM DECODING OPERATION, BASED ON WHITENING WIRELESS SIGNAL —— S460

END

# FIG. 5

START

DETERMINE FIRST AREA AND SECOND AREA —— S510

SUBDIVIDE SECOND AREA INTO PLURALITY OF SUBDIVISION AREAS —— S520

CALCULATE FIRST ADJUSTMENT WHITENING FILTER AND PLURALITY OF SUBDIVISION ADJUSTMENT WHITENING FILTERS TO BE RESPECTIVELY APPLIED TO FIRST AREA AND PLURALITY OF SUBDIVISION AREAS —— S530

PERFORM INTERFERENCE WHITENING OPERATION ON FIRST AREA AND PLURALITY OF SUBDIVISION AREAS, BASED ON FIRST ADJUSTMENT WHITENING FILTER AND PLURALITY OF SUBDIVISION ADJUSTMENT WHITENING FILTERS —— S540

END

# FIG. 6

START

DETERMINE THAT RE LOCATED BETWEEN DMRSs INCLUDED IN SAME PRG IN RE REGION IS FIRST AREA — S610

DETERMINE THAT RE LOCATED BETWEEN DMRSs INCLUDED IN DIFFERENT PRGs IN RE REGION IS FIRST AREA — S620

DETERMINE THAT RE LOCATED OUTSIDE DMRS IN FIRST DIRECTION IS FIRST AREA, WHEN DELAY SPREAD IS LESS THAN THRESHOLD DELAY VALUE — S630

DETERMINE THAT RE LOCATED OUTSIDE DMRS IN SECOND DIRECTION IS FIRST AREA, WHEN DOPPLER FREQUENCY IS LESS THAN THRESHOLD FREQUENCY VALUE — S640

DETERMINE THAT RE, WHICH IS NOT SET AS FIRST AREA, IS SECOND AREA — S650

END

# FIG. 7

# FIG. 8

# FIG. 9

# FIG. 10

START

IS DELAY SPREAD GREATER THAN FIRST DELAY VALUE ? — S1010

YES

NO

SEGMENT FIRST PORTION OF SECOND AREA INTO PLURALITY OF SEGMENTATION AREAS BY DIVIDING FIRST PORTION OF SECOND AREA INTO SUBCARRIER UNITS — S1020

IS DOPPLER FREQUENCY GREATER THAN FIRST FREQUENCY VALUE ? — S1030

YES

NO

SEGMENT SECOND PORTION OF SECOND AREA INTO PLURALITY OF SEGMENTATION AREAS BY DIVIDING SECOND PORTION OF SECOND AREA INTO SYMBOL UNITS — S1040

END

# FIG. 11

# FIG. 12

SUBCARRIER
(frequency axis)

SYMBOL
(time axis)

| | |
|---|---|
| ⊘ PDCCH | |
| ⊠ DMRS | |
| First Area | |
| Second Area | |

# FIG. 13

SUBCARRIER
(frequency axis)

SYMBOL
(time axis)

Legend:
- PDCCH
- DMRS
- First Area
- Second Area

# FIG. 14

```
                    ┌─────────┐
                    │  START  │
                    └────┬────┘
                         │
                         ▼
                  ◇ IS DELAY          ─S1410
                 ◇ SPREAD GREATER ◇ ────────── NO ──────────────────┐
                  ◇ THAN FIRST DELAY ◇                              │
                    ◇ VALUE ? ◇                                     │
                         │                                          │
                        YES                                         │
                         │                                          │
                         ▼                                          │
                  ◇ IS DELAY          ─S1420                        │
                 ◇ SPREAD GREATER ◇ ────── NO ──────┐               │
                 ◇ THAN SECOND DELAY ◇              │               │
                    ◇ VALUE ? ◇                     │               │
                         │                          │               │
                        YES                         │               │
                         │                          │               │
                 ─S1440  ▼                  ─S1430   ▼               │
   ┌─────────────────────────────┐   ┌─────────────────────────────┐│
   │  SUBDIVIDE FIRST PORTION OF  │   │  SUBDIVIDE FIRST PORTION OF  ││
   │ SECOND AREA INTO PLURALITY OF│   │ SECOND AREA INTO PLURALITY OF││
   │  SUBDIVISION AREAS BY DIVIDING│  │  SUBDIVISION AREAS BY DIVIDING│
   │  FIRST PORTION OF SECOND AREA │  │  FIRST PORTION OF SECOND AREA │
   │    INTO SECOND NUMBER OF     │   │    INTO FIRST NUMBER OF      ││
   │      SUBCARRIER UNITS        │   │      SUBCARRIER UNITS        ││
   └───────────────┬──────────────┘   └──────────────┬──────────────┘│
                   │                                 │               │
                   ◄─────────────────────────────────┴───────────────┘
                   │
                   ▼
              ┌─────────┐
              │  S1610  │
              └─────────┘
```

# FIG. 15

SUBCARRIER
(frequency axis)

SYMBOL
(time axis)

PDCCH
DMRS
First Area
Second Area

# FIG. 16

S1440

S1610

IS DOPPLER
FREQUENCY GREATER
THAN FIRST FREQUENCY
VALUE ?

NO

YES

S1620

IS DOPPLER
FREQUENCY GREATER
THAN SECOND FREQUENCY
VALUE ?

NO

YES

S1640

SUBDIVIDE SECOND PORTION OF
SECOND AREA INTO PLURALITY OF
SUBDIVISION AREAS BY DIVIDING
SECOND PORTION OF SECOND AREA
INTO FOURTH NUMBER OF SYMBOL
UNITS

S1630

SUBDIVIDE SECOND PORTION OF
SECOND AREA INTO PLURALITY OF
SUBDIVISION AREAS BY DIVIDING
SECOND PORTION OF SECOND AREA
INTO THIRD NUMBER OF SYMBOL
UNITS

END

# FIG. 17

SUBCARRIER
(frequency axis)

PDCCH
DMRS
First Area
Second Area

SA1

SYMBOL
(time axis)

# FIG. 18

```
                          ( START )
                             │
                             ▼
┌─────────────────────────────────────────────────┐
│ DETERMINE WHETHER DIFFERENCE BETWEEN CHANNEL      │
│ ESTIMATION ERROR VALUE OF ANY ONE OF PLURALITY OF │
│ SUBDIVISION AREAS AND CHANNEL ESTIMATION ERROR    │── S1810
│ VALUE OF ADJACENT SUBDIVISION AREA IS LESS THAN OR│
│ EQUAL TO REFERENCE DIFFERENCE                     │
└─────────────────────────────────────────────────┘
                             │
                             ▼
┌─────────────────────────────────────────────────┐
│ MERGE ANY ONE OF PLURALITY OF SUBDIVISION AREAS   │
│ AND ADJACENT SUBDIVISION AREA INTO SAME           │── S1820
│ SUBDIVISION AREA                                  │
└─────────────────────────────────────────────────┘
                             │
                             ▼
                          ( END )
```

# FIG. 19

# FIG. 20

START

CALCULATE DMRS AVERAGE NOISE INTERFERENCE VALUE FROM REs WITH DMRS ASSIGNED THERETO, WHICH ARE INCLUDED IN RE REGION ──S2010

CALCULATE FIRST AVERAGE NOISE INTERFERENCE VALUE FROM REs INCLUDED IN FIRST AREA ──S2020

CALCULATE PLURALITY OF SUBDIVISION AVERAGE NOISE INTERFERENCE VALUES FROM REs INCLUDED IN EACH OF PLURALITY OF SUBDIVISION AREAS ──S2030

CALCULATE FIRST ADJUSTMENT WHITENING FILTER, BASED ON DMRS AVERAGE NOISE INTERFERENCE VALUE AND FIRST AVERAGE NOISE INTERFERENCE VALUE ──S2040

CALCULATE PLURALITY OF SUBDIVISION ADJUSTMENT WHITENING FILTERS, BASED ON DMRS AVERAGE NOISE INTERFERENCE VALUE AND PLURALITY OF SUBDIVISION AVERAGE NOISE INTERFERENCE VALUES ──S2050

END

# FIG. 21

```
        ┌─────────┐
        │  START  │
        └─────────┘
             │
             ▼
┌─────────────────────────────────────────┐
│ CALCULATE FIRST ADJUSTMENT COEFFICIENT,  │
│ BASED ON DMRS AVERAGE NOISE INTERFERENCE │──── S2110
│ VALUE AND FIRST AVERAGE NOISE            │
│ INTERFERENCE VALUE                       │
└─────────────────────────────────────────┘
             │
             ▼
┌─────────────────────────────────────────┐
│ CALCULATE FIRST ADJUSTMENT WHITENING     │
│ FILTER BY MULTIPLYING FIRST ADJUSTMENT   │──── S2120
│ COEFFICIENT BY WHITENING FILTER          │
└─────────────────────────────────────────┘
             │
             ▼
        ┌─────────┐
        │   END   │
        └─────────┘
```

# FIG. 22

START

CALCULATE PLURALITY OF SUBDIVISION ADJUSTMENT
COEFFICIENTS, BASED ON DMRS AVERAGE NOISE
INTERFERENCE VALUE AND PLURALITY OF SUBDIVISION
AVERAGE NOISE INTERFERENCE VALUES
— S2210

CALCULATE PLURALITY OF SUBDIVISION ADJUSTMENT
WHITENING FILTERS BY MULTIPLYING PLURALITY OF
SUBDIVISION ADJUSTMENT COEFFICIENTS BY
WHITENING FILTER
— S2220

END

# FIG. 23

START

DETERMINE FIRST AREA AND SECOND AREA — S2310

CALCULATE FIRST ADJUSTMENT WHITENING FILTER AND SECOND ADJUSTMENT WHITENING FILTER TO BE RESPECTIVELY APPLIED TO FIRST AREA AND SECOND AREA — S2320

PERFORM INTERFERENCE WHITENING OPERATION ON FIRST AREA AND SECOND AREA, BASED ON FIRST ADJUSTMENT WHITENING FILTER AND SECOND ADJUSTMENT WHITENING FILTER — S2330

END

# FIG. 24

1000

1010

1012

DATA STORAGE

1011

PROGRAM STORAGE

1013

APPLICATION PROGRAM

1014

INTERFERENCE WHITENING PROGRAM

1020

1021

MEMORY INTERFACE

1023

PERIPHERAL DEVICE INTERFACE

1022

PROCESSOR

1090

COMMUNICATION PROCESSOR

1040

I/O CONTROLLER

1050 — DISPLAY

INPUT DEVICE — 1060

EP 4 697 658 A1

# FIG. 25

2000

**HOME GADGET GROUP** — 2100

2120 — **HOME APPLIANCE/FURNITURE GROUP**

2200 — Access Point

**ENTERTAINMENT GROUP** — 2140

2250

2300

2400 — **SERVER**

2160 — **VEHICLE GROUP**

EP 4 697 658 A1

Europäisches
Patentamt

European
Patent Office

Office européen
des brevets

# EUROPEAN SEARCH REPORT

**Application Number**

EP 25 19 2853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/107805 A1 (LUO TAO [US] ET AL) 2 May 2013 (2013-05-02) * abstract * * paragraphs [0052] - [0055] * * claim 1 * * figures 8-10 * | 1-15 | INV. H04L25/03 H04J11/00 ADD. H04L25/02 |
| X | US 2018/070365 A1 (JE HUI-WON [KR] ET AL) 8 March 2018 (2018-03-08) * abstract * * paragraphs [0002], [0005], [0058], [0062], [0087], [0089], [0105] - [0113], [0123] * * figures 3,6A-6G * | 1-15 | |

**TECHNICAL FIELDS SEARCHED (IPC)**

H04L
H04B
H04J

The present search report has been drawn up for all claims

| Place of search | Date of completion of the search | Examiner |
|---|---|---|
| Munich | 10 November 2025 | Murcia Martinez, J |

EPO FORM 1503 03.82 (P04C01)

## ANNEX TO THE EUROPEAN SEARCH REPORT
## ON EUROPEAN PATENT APPLICATION NO.

EP 25 19 2853

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | Publication date | Patent family member(s) | Publication date |
|---|---|---|---|
| US 2013107805 A1 | 02-05-2013 | US 2013107805 A1<br>WO 2013067196 A1 | 02-05-2013<br>10-05-2013 |
| US 2018070365 A1 | 08-03-2018 | KR 20180027968 A<br>US 2018070365 A1 | 15-03-2018<br>08-03-2018 |

EPO FORM P0459

For more details about this annex : see Official Journal of the European Patent Office, No. 12/82